# EUROPEAN PATENT APPLICATION

(11) **EP 2 953 032 A1**
(43) Date of publication of application: **09.12.2015**
(21) Application number: 13873624.4
(22) Date of filing: 31.01.2013
(51) Int. Cl.: G06F 13/00

(54) **VIRTUAL COMPUTER MANAGEMENT PROGRAM, VIRTUAL COMPUTER MANAGEMENT METHOD, AND VIRTUAL COMPUTER SYSTEM**

(71) Applicant: Fujitsu Limited, Kawasaki-shi, Kanagawa 211-8588 (JP)
(72) Inventor: YANAGISAWA, Natsuki, Kawasaki-shi Kanagawa 211-8588 (JP); SUAMI, Ichiro, Kawasaki-shi Kanagawa 211-8588 (JP); ICHIMARU, Michito, Fukuoka-shi, Fukuoka 814-0001 (JP); KINOSHITA, Sojiro, Fukuoka-shi, Fukuoka 814-0001 (JP)
(74) Representative: Hoffmann Eitle
(86) International application number: PCT/JP2013/052276
(87) International publication number: WO 2014/118961

(57) **Abstract**

A non-transitory computer-readable storage medium storing a program therein for causing a computer to execute a process that includes extracting, when a virtual computer running on one of physical computers is booted, time correction information corresponding to an attribute of a boot target virtual computer from time correction registration information which include the time correction information corresponding to the attribute of the virtual computer; and transmitting a boot command for booting the boot target virtual computer, based on the extracted time correction information, to the one of physical computers.

## Description

### TECHNICAL FIELD

The present invention relates to a virtual computer management program, a virtual computer management method, and a virtual computer system.

### BACKGROUND ART

A cloud service virtualizes a group of hardware components such as a plurality of physical machines (or physical servers or physical computers) or physical storages in a server facility based on a service contract with a cloud user and provides infrastructure such as its virtual machines (or virtual computers) or virtual storages to the cloud user as a service via a network.

In such a cloud service, a hypervisor (or virtualization software) operating on a physical machine allocates hardware resources of the physical machine to a plurality of virtual machines and operates the virtual machines so that a service according to application programs installed in the respective virtual machines is provided. Thus, a plurality of virtual machines are created (or deployed) respectively in a plurality of physical machines provided in a server facility by allocating each of physical machine by the respective hypervisors. When the virtual machine is booted, the virtual machine enters an operating state.

Standard (or default) configuration information (for example, default time information) is configured to each of the hypervisors operating on a physical machine. Thus, when a new virtual machine is created and booted on a physical machine, the virtual machine is booted based on time information which is the default configuration information thereof.

### PRIOR TECHNICAL LITERATURE

### PATENT LITERATURE

Patent Literature 1: Japanese Laid-open Patent Publication No. 11-015558

### SUMMARY OF INVENTION

### PROBLEMS TO BE SOLVED BY THE INVENTION

On the other hand, a cloud user who operates a system globally in a plurality of regions may need to configure time flexibly according to the convenience of the system of the cloud user regardless of a difference in physical machines in respective regions and a time zone of a region in which a cloud service is provided.

For example, the same time is configured to a plurality of virtual machines created and booted on physical machines in server facilities of different time zones. Moreover, in a system including virtual machines created and booted on a physical machine in a server facility of a certain time zone, a virtual machine may be added on a physical machine of a different time zone in order to eliminate an overload state and the same time as the existing system may need to be configured to the newly added virtual machine.

However, in the above-mentioned cases, as described above, when a new virtual machine is created and booted on a physical machine, the virtual machine is booted based on the default time information of a hypervisor. Thus, the cloud user may have to cause the hypervisor to configure desired time correction information manually for respective virtual machines after boot.

Further, in some case, it may be necessary to configure the time of the same time zone to virtual machines having the same attribute such as a system, a network segment, or a SLB (server level balancer), for example. In this case, when a new virtual machine is created and booted according to auto-scaling and the new virtual machine is created on a physical machine of a different time zone from the time zone of the existing virtual machine, it is necessary to configure the time correction information corresponding to the attribute of the virtual machine manually as described above.

Moreover, when a plurality of new virtual machines are booted based on different default time information and a certain malfunction occurs during boot, since the time information in the operation history information of the respective virtual machines is not consistent, it may cause difficulties in analysis of the malfunction.

Therefore, an object of one embodiment is to provide a virtual computer management program, a virtual computer management method, and a virtual computer system capable of configuring desired time correction

### MEANS FOR SOLVING THE PROBLEMS

One embodiment is a non-transitory computer-readable storage medium storing a program therein for causing a computer to execute a process comprising:
extracting, when a virtual computer running on one of physical computers is booted, time correction information corresponding to an attribute of a boot target virtual computer from time correction registration information which include the time correction information corresponding to the attribute of the virtual computer; and
transmitting a boot command for booting the boot target virtual computer, based on the extracted time correction information, to the one of physical computers.

### ADVANTAGEOUS EFFECTS OF THE INVENTION

According to the embodiments, since a common management server registers time correction information to different hypervisors, new virtual computers are booted automatically based on the time correction information.

### BRIEF DESCRIPTION OF DRAWINGS

Fig. 1 is a diagram illustrating an example of a physical machine, a hypervisor, and a virtual machine.
Figs. 2A and 2B are diagrams illustrating examples in which the same time correction is performed in respective systems.
Figs. 3A and 3B are diagrams illustrating examples in which the same time correction is performed on a subordinate request distribution destination virtual machine group of a server load balancer.
Figs. 4A and 4B are diagrams illustrating examples in which the same time correction is performed within the same network segment.
Fig. 5 is a diagram illustrating an entire configuration of a cloud system according to the present embodiment.
Fig. 6 is a diagram illustrating an example of the functions of the hypervisor.
Fig. 7 is a diagram illustrating a configuration example of the management server.
Fig. 8 is a diagram illustrating an example of a time correction configuration screen on a management console.
Fig. 9 is a diagram illustrating a specific example of a system to be controlled by the management server according to the present embodiment.
Fig. 10 is a diagram illustrating an example of the time correction information table in the management information table 322 of the management server 3.
Fig. 11 is a diagram illustrating an example of the system (VSYS) information table, the virtual machine information table, and the SLB information table in the management information table 322 of the management server 3.
Fig. 12 is a flowchart illustrating the flow of creating virtual machines.
Fig. 13 is a flowchart illustrating the flow of booting virtual machines.
Fig. 14 is a flowchart illustrating the flow of creating and booting virtual machines when a cloud service user manually creates and boots a virtual machine that forms a new system from a terminal (Case (1)).
Fig. 15 is a flowchart illustrating the flow of creating and booting virtual machines when a cloud service user manually creates and boots an additional virtual machine in an existing system from a terminal (Case (2)).
Fig. 16 is a flowchart illustrating the flow of creating and booting virtual machines when an additional virtual machine is created and booted according to an auto-scale command from a SLB or the like (Case (3)).
Figs. 17A and 17B are diagrams illustrating a virtual machine creation and boot process when time correction is configured collectively for a system, which is a first example.
Fig. 18 is a diagram illustrating a management information table referred to in the virtual machine creation and boot process of Figs. 17A and 17B.
Figs. 19A and 19B are diagrams illustrating a virtual machine creation and boot process when time correction is configured collectively for a network segment, which is a second example.
Fig. 20 is a diagram illustrating a management information table referred to in the virtual machine creation and boot process of Figs. 19A and 19B.
Figs. 21A and 21B are diagrams illustrating a virtual machine creation and boot process when time correction is configured collectively for respective SLBs, which is a third example.
Fig. 22 is a diagram illustrating a management information table referred to in the virtual machine creation and boot process of Figs. 21A and 21B.
Fig. 23 is a diagram illustrating an example in which virtual machines belonging to the same attribute are booted based on the registered time correction information.
Fig. 24 is a diagram for describing migration in the management server of the present embodiment.
Fig. 25 is a flowchart illustrating a migration process.

### DESCRIPTION OF EMBODIMENTS

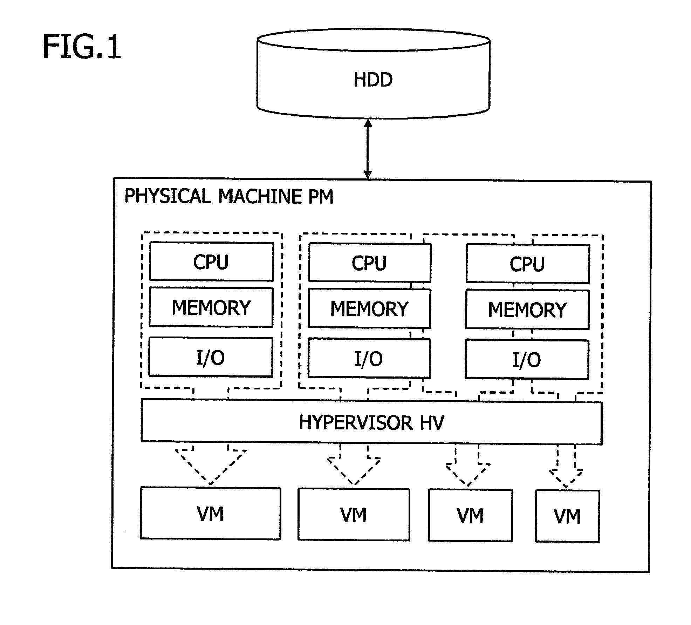

[Physical machine, hypervisor, and virtual machine] Fig. 1 is a diagram illustrating an example of a physical machine, a hypervisor, and a virtual machine. A physical machine PM includes one or a plurality of CPUs, memories, input/output devices I/Os. Moreover, the physical machine PM is connected to a hard disk HDD. The hard disk HDD may be included in or externally attached to the physical machine PM.

A hypervisor HV (virtualization software) virtualizes and allocates the resources of the physical machine PM such as a plurality of CPUs, memories, and I/Os to a plurality of virtual machines VMs so that the virtual machines VMs operate or run on the physical machine. Thus, the number of created virtual machines VMs does not depend on the number of physical machines PMs and the number of CPUs.

When creating a new virtual machine VM, the hypervisor HV stores newly creating virtual machine information (for example, a CPU clock frequency, a memory volume (GB), a hard disk volume (MB/sec, IOPS), a network bandwidth (Gbps), and the like) in a VM information file of the hypervisor HV. This VM information file is stored in the hard disk HDD. Hereinafter, a virtual machine is created by storing the virtual machine information in the VM information file.

After creating the virtual machines VMs, the hypervisor HV boots the virtual machines VMs with default configuration information possessed by the hypervisor HV. The virtual machines VMs realize desired functions by executing an OS and an application program installed therein. After booting the virtual machines, when the configuration information of the virtual machines is changed in the hypervisor HV, the hypervisor HV stores the changed configuration information in the VM information file of the hypervisor in the hard disk HDD and reboots the virtual machine VM with the stored changed configuration information during reboot. The configuration information is time configuration information, for example.

The same is true for physical machines of the Windows OS (Windows is a registered trademark). That is, when a physical machine is booted for the first time, the physical machine is booted based on the default time information of a BIOS. After boot, when the default time information is corrected or changed on an OS, the time correction information is stored in the BIOS. In the next boot, since the OS reads the time correction information of the BIOS and the physical machine is booted at the corrected time, it is not necessary to correct the time every boot.

[Need of time correction configuration] However, when a virtual system is constructed by a plurality of virtual machines created in one or a plurality of physical machines, it may be necessary to configure the plurality of virtual machines to the same time according to the convenience of the system. Since a plurality of virtual machines created in different physical machines are booted based on the default time information of the hypervisors of the respective physical machines during the first boot, the time information may not be consistent or be different from desired time information. Thus, after the virtual machines are booted, a system administrator needs to configure the time correction information to respective hypervisors so that correction is made manually to synchronize the plurality of virtual machines to the same time.

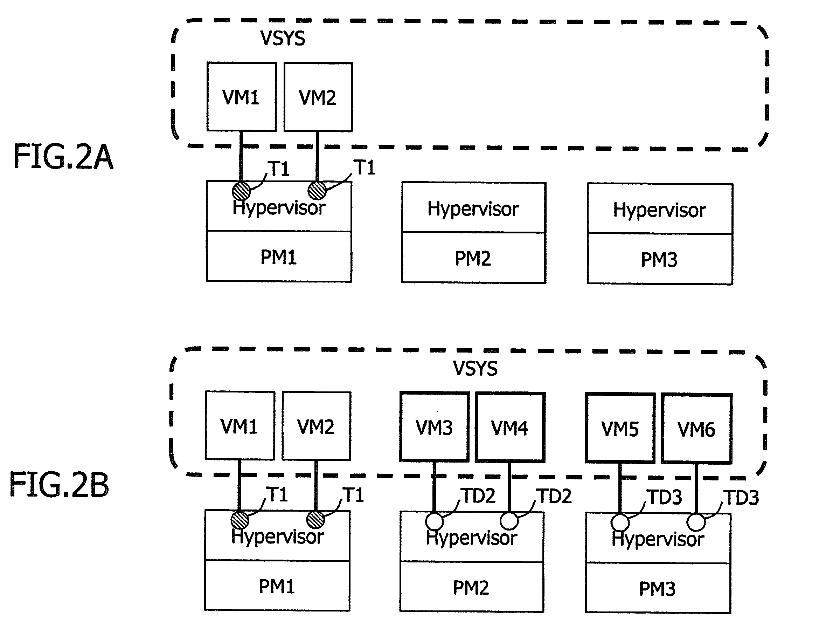

Figs. 2A and 2B are diagrams illustrating examples in which the same time correction is performed in respective systems. In Fig. 2A, two virtual machines VM1 and VM2 are created and booted in a physical machine PM1. These virtual machines VM1 and VM2 construct a system VSYS that provides a desired service.

When the virtual machines VM1 and VM2 are created using a cloud service, it is difficult to predict in which physical machine PM the respective virtual machines will be created because it is determined according to the convenience of a cloud service center (server facility). For example, a system VSYS for England may be constructed using virtual machines created in a physical machine in a Japan's cloud service center, and a Japan-dedicated system VSYS may be constructed using virtual machines created in a physical machine in a Germany's cloud service center.

In the example of Fig. 2A, the virtual machines VM1 and VM2 created in the physical machine PM1 are initially booted based on the default time configuration of a hypervisor. However, after boot, time correction information T1 is configured to the hypervisor in relation to the respective virtual machine VM1 and VM2 and the time correction information T1 is configured in a configuration file that the hypervisor stores in a hard disk. In the drawing, the time correction information T1 is configured in the configuration file of the hypervisor. This configuration file is stored in a VM information file in a disk area of the physical machine PM1 of the hypervisor.

Thus, as illustrated in the example of Fig. 2B, when virtual machines VM3 to VM6 are added due to an increase in the number of accesses to the system VSYS, the new virtual machines VM3 and VM4 may be created and booted in a physical machine PM2 different from the physical machine PM1 and the new virtual machines VM5 and VM6 may be created and booted in a physical machine PM3 different from the physical machines PM1 and PM2. In this case, the virtual machines VM3 and VM4 are booted based on default time configuration information TD2 of the hypervisor of the physical machine PM2, and the virtual machines VM5 and VM6 are booted based on default time configuration information TD3 of the hypervisor of the physical machine PM3. As a result, the time correction information T1 of the virtual machines VM1 and VM2, the default time configuration information TD2 of the new virtual machines VM3 and VM4, and the default time configuration information TD3 of the new virtual machines VM5 and VM6 are not consistent. Moreover, the time configurations of the virtual machines VM3 to VM6 are different from the desired time correction information T1.

Thus, the administrator of the system VSYS needs to configure the time correction information T1 to the hypervisor for the respective new virtual machines VM3 to VM6. Such configuration is generally performed manually by the administrator of the system VSYS.

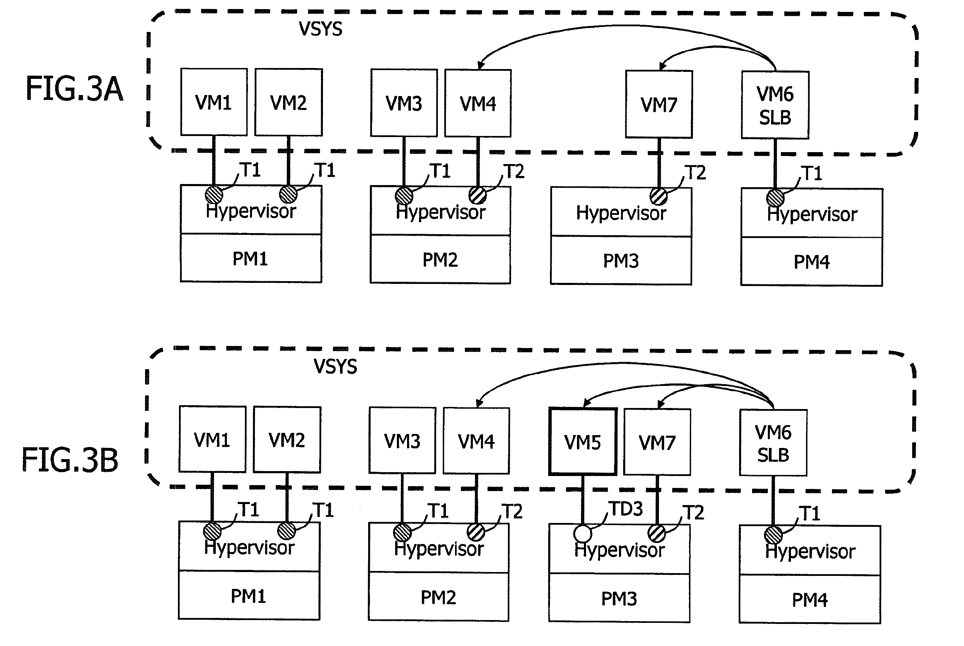

Figs. 3A and 3B are diagrams illustrating examples in which the same time correction is performed on a subordinate request distribution destination virtual machine group of a server load balancer. In Fig. 3A, two virtual machines VM1 and VM2 are created and booted in the physical machine PM1, one virtual machine VM3 is created and booted in the physical machine PM2, and a virtual machine VM6 having the function of a server load balancer SLB is created and booted in the physical machine PM4. Moreover, the server load balancer SLB (VM6) distributes a request to two subordinate virtual machines VM4 and VM7 of the SLB in a well-balanced manner. The distribution destination virtual machines VM4 and VM7 of this request are created and booted in the physical machines PM2 and PM3, respectively. Moreover, these virtual machines construct a system VSYS that provides a desired service. Moreover, the time correction information T1 is configured to the hypervisors of the virtual machines VM1 to VM3 and VM6, and the time correction information T2 is configured to the hypervisors of the distribution destination virtual machines VM4 and VM7 of the SLB.

In the example of Fig. 3A, the system VSYS provides a Web system and the time information of only the virtual machines VM4 and VM7 that form a HTTP server that receives requests is corrected and configured to the time T2 of a region in which the Web service is provided.

In the example of Fig. 3B, due to an increase in the number of requests, a SLB (VM6) performs scaling-out automatically to add a new virtual machine VM5 to a request distribution destination virtual machine group. In this case, when the new virtual machine VM5 is created and booted in the physical machine PM3, the virtual machine VM5 is booted based on the default time TD3 of the hypervisor of the physical machine PM3. Thus, it is necessary to manually configure the time correction information T2 to the hypervisor of the virtual machine VM5 after boot. Therefore, it is not worthwhile for the SLB to scale out the virtual machine VM5 automatically.

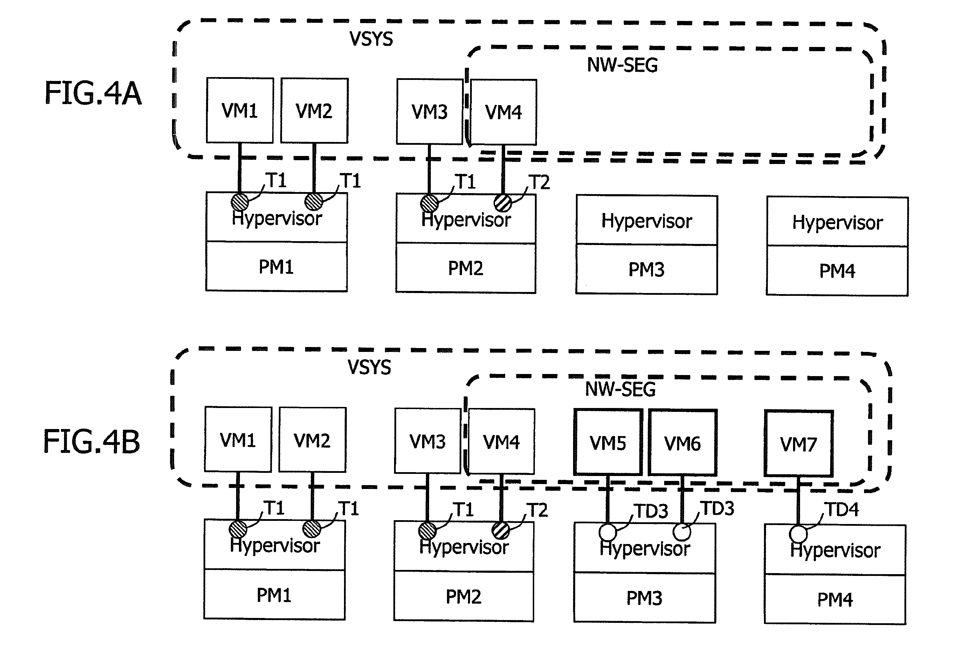

Figs. 4A and 4B are diagrams illustrating examples in which the same time correction is performed within the same network segment. In Fig. 4A, four virtual machines VM1 to VM4 are created and booted to form a system VSYS. For example, the time correction T2 for England is configured to the hypervisor of the virtual machine VM4 having the function of an England-dedicated HTTP server as a server to be open to the Internet, and the time correction information T1 for Japan is configured to the hypervisors of the virtual machines VM1 to VM3 having the function of a back-office server in Japan. The virtual machine VM4 of the HTTP sever to be open to the Internet is provided in a network segment disposed at an intermediate position between an intranet and the Internet such as a demilitarized zone (DMZ). The virtual machines VM1 to VM3 of the back-office server are provided in a secure network segment. In this manner, the same time correction may be performed within the same network segment and different time correction may be performed between different network segments.

In Fig. 4B, an overload state is not cleared with only the virtual machine VM4 in the network segment NW-SEG and new virtual machines VM5, VM6, and VM7 are scaled out automatically. However, the virtual machines VM5 and VM6 are created and booted in the physical machine PM3 and are booted based on the default time TD3 of the hypervisor, and the virtual machine VM7 is created and booted in the physical machine PM4 and is booted based on the default time TD4 of the hypervisor.

Thus, it is necessary to configure the time correction information T2 to the hypervisors of the respective virtual machines VM5 to VM7 manually after boot.

As described above, when a system is constructed by a plurality of virtual machines, it may be necessary to configure the same time to the virtual machines according to the attributes such as an attribute that the virtual machines belong to the same system, an attribute that the virtual machines belong to the same network segment, and an attribute that the virtual machines are request distribution destination virtual machines of the SLB. It may be necessary to configure the same time to virtual machines having the other attributes. However, when new virtual machines are created and booted by the hypervisors of single or different physical machines, the virtual machines are booted based on the default time configuration information of the respective hypervisors. Thus, it is necessary to configure the same time correction information to the respective hypervisors of the plurality of virtual machines belonging to the same attribute after boot. However, such configuration of the time correction information is complex.

Therefore, in the present embodiment, time correction information is registered in advance for respective attributes in a management server that manages virtual machines, other than a hypervisor that manages the information of a virtual machine, and the time correction information is stored as a database. When the management server boots a new virtual machine, a boot command including the registered time correction information is transmitted to a physical machine of the virtual machine to be booted so that the hypervisor of the physical machine boots the virtual machine based on the time correction information included in the boot command rather than based on the default time configuration information. Thus, when virtual machines are created and booted in single or different physical machines, since the virtual machines are booted based on the time correction information registered in the management server, desired time correction information is configured for the respective attribute of the virtual machines consistently. Thus, it is not necessary to configure the time correction information manually after boot. Hereinafter, the present embodiment will be described.

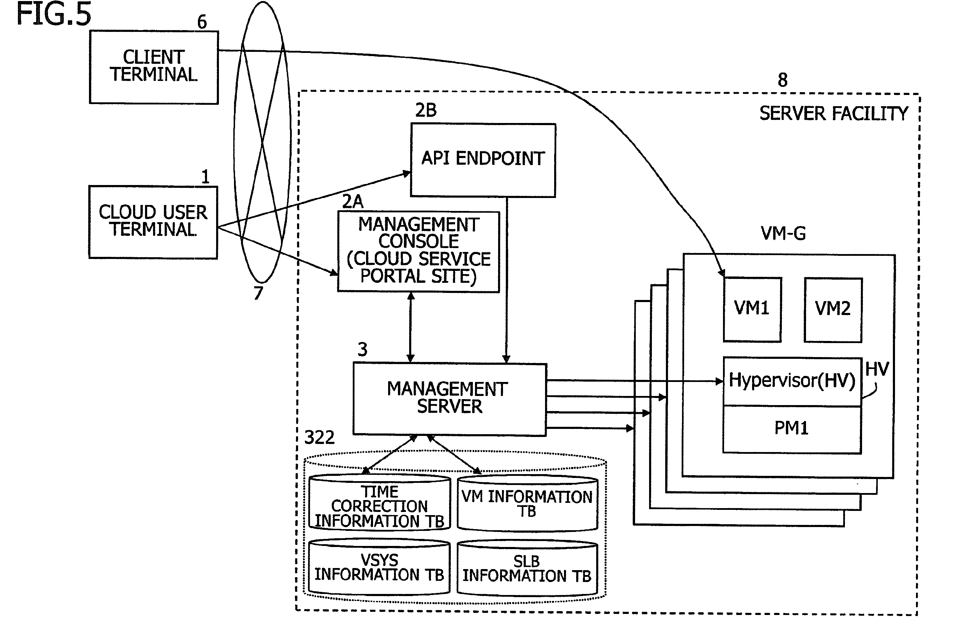

[Configuration of cloud system in present embodiment] Fig. 5 is a diagram illustrating an entire configuration of a cloud system according to the present embodiment. A virtual machine group VM-G created in hardware such as a physical machine PM, a cloud service portal site 2A that provides a management console to a cloud user, and a management server 3 are provided in a server facility 8. In the server facility 8, a cloud user terminal 1 and a service client terminal 6 of the cloud user are connected via a network 7 such as the Internet or an intranet. Moreover, in addition to the cloud service portal site 2A, an API endpoint 2B for allowing a direct command (which is one kind of API) to be transmitted from the cloud user terminal 1 to the management server 3 is also provided.

The virtual machine group (or virtual computer group) VM-G includes a plurality of physical machines PMs (or physical servers or physical computers), and each physical machine PM includes a CPU, a memory (DRAM), a large-volume memory such as a hard disk (HDD), and a network. The resources of the physical machine PM which is hardware are allocated to a plurality of virtual machines VMs. The cloud service portal site 2 and the management server 3 may be constructed by these virtual machines VMs, for example.

A cloud service that the cloud system provides to cloud users is a service of providing infrastructure (that is, infrastructure itself such as a virtual machine or a network) for constructing and operating a computer system via the network 7.

A cloud user accesses the cloud service portal site 2 from the terminal 1, selects specifications (for example, a CPU clock frequency, a memory volume (GB), a hard disk volume (MB/sec, IOPS), and a network bandwidth (Gbps)) required for a virtual machine using a management console, and makes a contract for a cloud service under these specifications. Moreover, the cloud user terminal 1 accesses the cloud service portal site 2 to monitor the operating state of the virtual machine and operates the virtual machine, for example.

The management server 3 manages physical machines PMs and the like in cooperation with a hypervisor (virtualization software) HV and allocates the hardware components of the physical machines to a virtual machine VM to create and mange the virtual machine VM. Moreover, the management server 3 has a management information table 322 which includes a time correction information table (or time correction registration information) (TB), a system (VSYS) information table (TB), a VM information table (TB), and a SLB information table (TB). The management information table 322 is also a time correction information table because it stores time correction information.

When creating a new virtual machine and a new system, the management server 3 registers time correction information in the management information table 322. Moreover, in response to a request to configure the time correction information of a virtual machine from a cloud user, the management server 3 registers the time correction information in the time correction information table TB so that the time correction information is reflected in the system (VSYS) information table TB, the VM information table TB, and the SLB information table TB.

The hypervisor HV is infrastructure software that operates on a physical machine and allocates the CPU, the memory, the hard disk, and the network of the physical machine PM, which is hardware, to operate the virtual machine according to an instruction from the management server 3.

The virtual machine VM is allocated with the physical machine PM which is hardware, and an image file that includes an OS, middleware MW, an application AP, a database DB, and the like is stored in a hard disk. For example, when booting the virtual machine VM, the image file is loaded from the hard disk to the memory and the virtual machine VM performs an operation of providing a desired service.

The client terminal 6 is a terminal of a client that receives the service of a system operated by a cloud user. The client terminal 6 generally accesses the virtual machine VM of the cloud user via the network 7 to receive the service operated by the cloud user.

The management server 3 monitors the load state of the virtual machine VM of the system and instructs the hypervisor HV to create and boot a new virtual machine via the physical machine in order to scale out a new virtual machine VM to the same physical machine or another physical machine when the system enters an overload state. Moreover, in response to an instruction to scale out a new distribution destination virtual machine from the SBL, the management server 3 instructs the hypervisor HV to create and boot a new virtual machine in the same physical machine or another physical machine via the physical machine.

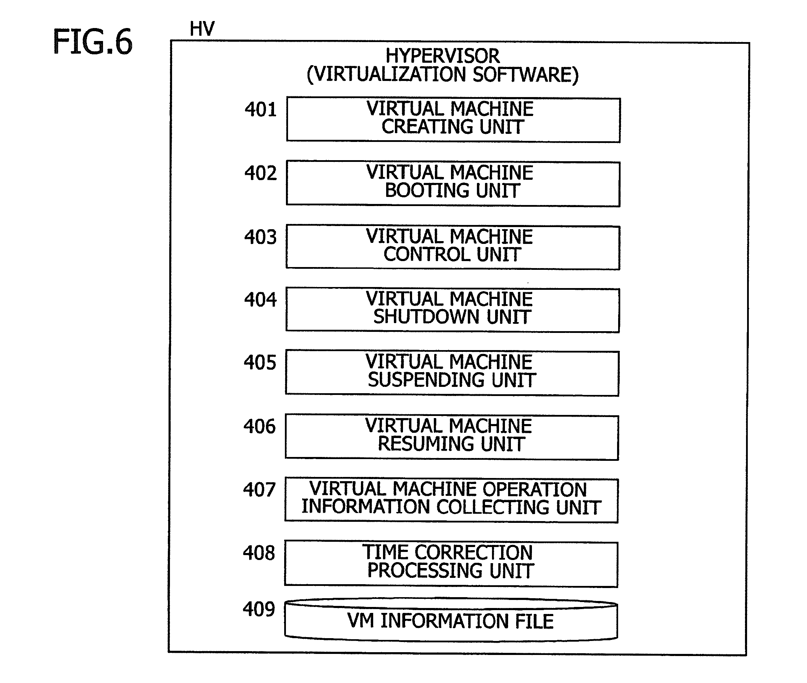

Fig. 6 is a diagram illustrating an example of the functions of the hypervisor. The hypervisor HV operates on the physical machine and allocates the resources of a group of hardware components such as a physical machine to the virtual machine VM to operate the virtual machine VM. Thus, the hypervisor HV includes, for example, a virtual machine creating unit 401 that create a virtual machine, a virtual machine booting unit 402 that boots a virtual machine, a virtual machine control unit 403, a virtual machine shutdown unit 404 that shuts down a virtual machine, a virtual machine suspending unit 405 that temporarily stops (that is, suspends) a virtual machine in an active state, a virtual machine resuming unit 406 that restarts (that is, resumes) a virtual machine in an suspended state, and a virtual machine operation information collecting unit 407 that collects operation information of a virtual machine. Further, the hypervisor HV includes a time correction processing unit 408 that corrects a time configuration value during boot in response to the configuration of the time correction information from the management server 3. The hypervisor HV stores the VM information file 409 that stores the information on the created virtual machine VM in a disk (not illustrated). The hypervisor HV boots the virtual machine by referring to the VM information file.

The virtual machine booting unit 402 executes a boot command including the time correction information received from the management server via the physical machine, boots the virtual machine based on the time correction information, and stores the time correction information in the VM information file 409. The boot command is one of the APIs that the hypervisor opens

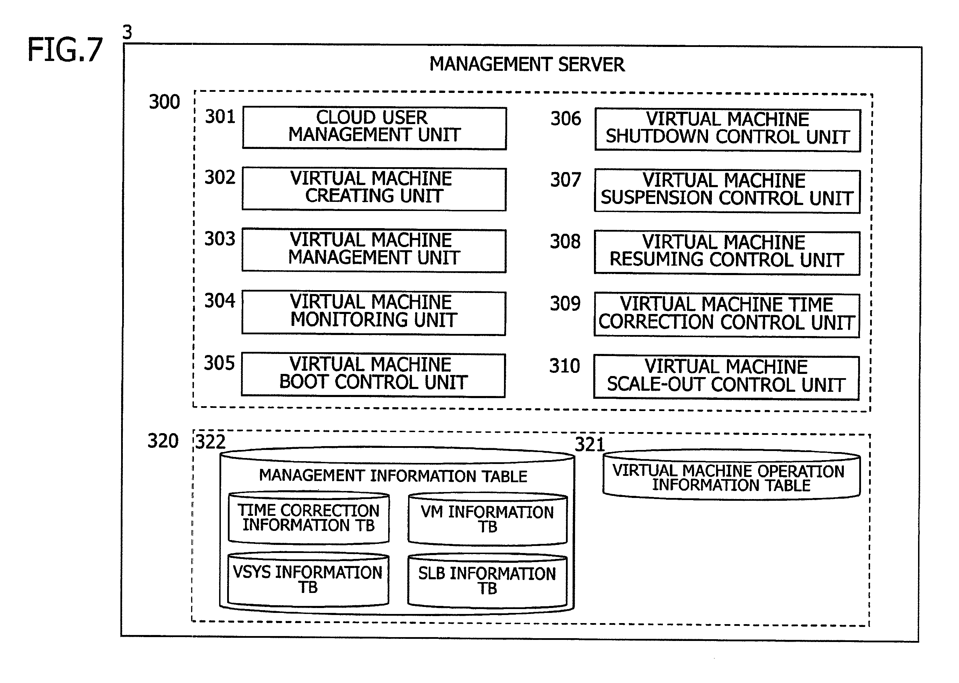

Fig. 7 is a diagram illustrating a configuration example of the management server. The management server 3 includes software 300 and a storage unit 320 in addition to hardware (not illustrated) such as a CPU.

The software 300 in the management server includes, for example, a cloud user management unit 301 that performs management of cloud users such as a process of charging the cloud users who made a contract for the cloud service using the cloud service portal site 2A, a virtual machine creating unit 302 that allocates hardware resources such as a physical machine based on the cloud contract to create the virtual machine VM, a virtual machine management unit 303 that manages a virtual machine, and a virtual machine monitoring unit 304 that monitors the operation of the virtual machine. The virtual machine creating unit 302 transmits a creation command including VM information to the hypervisor HV via the physical machine, for example, to store the VM information in the VM information file.

Further, the software 300 includes a virtual machine boot control unit 305 that instructs the hypervisor HV to boot a virtual machine via the physical machine, a virtual machine shutdown control unit 306 that instructs the hypervisor HV to shut down a virtual machine in an active state, a virtual machine suspension control unit 307 that instructs the hypervisor HV to suspend a virtual machine in an active state, a virtual machine resuming control unit 308 that instructs the hypervisor HV to resume a virtual machine, a virtual machine time correction control unit 309 that configures time correction information of a virtual machine, and a virtual machine scale-out control unit 310 that instructs the hypervisor HV to scale out a new virtual machine.

When a virtual machine boot command is received via the management console 2A or the API endpoint 2B or an auto-scale command is booted by the SLB or the like, and when time correction information is registered in the attribute of a boot target virtual machine, the virtual machine boot control unit 305 transmits a boot command including the time correction information to the hypervisor via the physical machine.

The storage unit 320 in the management server includes, for example, a virtual machine operation information table 321 that includes the operation information of a virtual machine reported from the hypervisor HV and the management information table 322 that includes the time correction information and the system, virtual machine, and SLB information tables in which the time correction information is reflected.

[Configuration of time correction information in management server in the present embodiment] Before booting a new virtual machine, in response to a request to register the time correction information in relation to a certain attribute of a virtual machine, transmitted from a cloud service user terminal or the like, the management server 3 of the present embodiment performs a process of registering first time correction information in relation to the attribute in the time correction information table in the management information table 322. After that, when a virtual machine created in a physical machine is booted, the management server 3 extracts the time correction information corresponding to the attribute of the boot target virtual machine from time correction registration information including the time correction information corresponding to the attribute of the virtual machine and transmits a boot command for booting the virtual machine based on the extracted time correction information to the physical machine that creates the boot target virtual machine. With this boot process, the management server causes the hypervisor to boot the virtual machine based on the time correction information.

The boot process includes a process of booting a virtual machine created when a system is constructed initially and a process of booting an additional virtual machine created in the constructed system in response to an auto-scale command or the like. In either case, when the time correction information corresponding to a certain attribute is registered in the management server before boot, the registered time correction information is included as an option in the boot command of the virtual machines belonging to the attribute, and the hypervisor HV boots the virtual machine based on the time correction information. Once the virtual machine is booted in this manner, since the hypervisor HV stores the time correction information in a VM information file, the virtual machine is booted based on the time correction information in a subsequent boot process.

Specific processes of creating the virtual machine, registering the time correction information, and booting the created virtual machine will be described below.

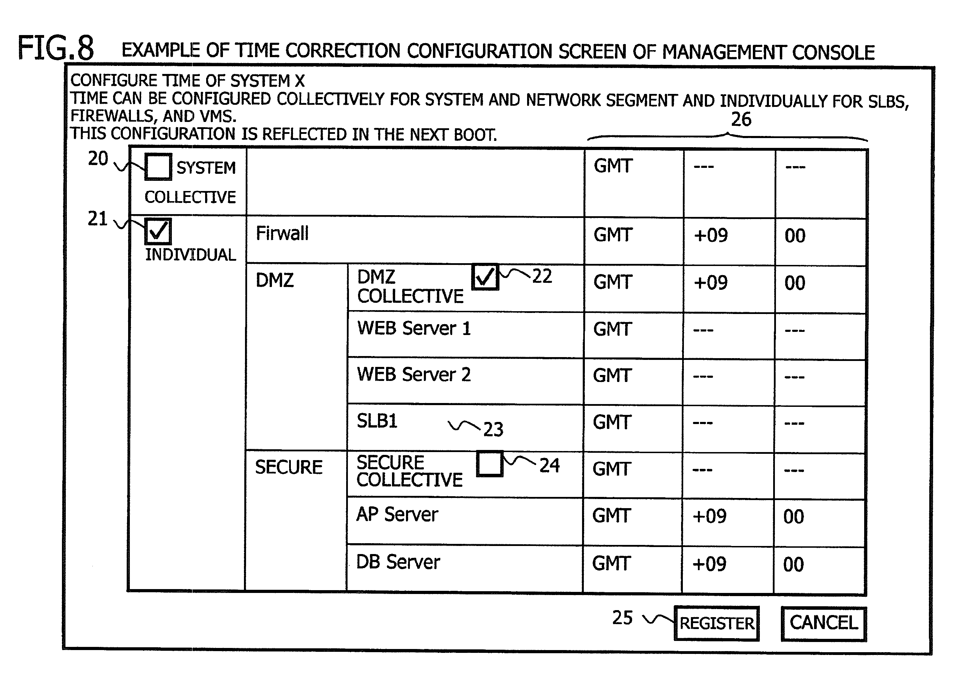

Fig. 8 is a diagram illustrating an example of a time correction configuration screen on a management console. In Fig. 8, virtual machines and firewalls that form a system are illustrated as a list table. In this example, it is assumed that virtual machines and the like that form the system are already created in a physical machine.

When the cloud user terminal 1 accesses the management console 2A of the cloud service portal site, the time correction configuration screen of Fig. 8 is displayed. This screen illustrates a state in which a certain system is selected and a time correction configuration screen is displayed.

The time correction configuration screen includes the following items;
(1) A check box 20 for performing time correction configuration collectively for all virtual machines and the like in the system;
(2) A check box 21 for performing time correction configuration individually for respective virtual machines, network segments, and SLBs rather than collectively for the system;
(3) A check box 22 for performing time correction configuration collectively for all virtual machines in a DMZ which is one of network segments;
(4) A check box 24 for performing time correction configuration collectively for all virtual machines in a secure network which is one of network segments;
(5) A line 23 for performing time correction configuration collectively for request distribution destination virtual machines of the SLB1; and
(6) In addition to the above, Lines for performing time correction configuration for a firewall and individual virtual machines (web server 1, web server 2, AP (application) server, and DB server).

A region 26 for configuring the time correction information is provided on the right side of these items and the time correction information is configured in the GMT expression.

If a user checks in the system collective check box 20 to configure the time zone or time in the GMT expression on the right side of the check box 20, even when all virtual machines in the presently selected system are booted by the hypervisor HV of a certain physical machine, the management server transmits a boot command to the hypervisor so that the virtual machines are booted based on the time correction information (GMT) configured herein.

Similarly, when a user checks in the DMZ collective check box 22 and the SECURE collective check box 24 to configure the time zone or time in the GMT expression, the management server transmits a boot command to the hypervisor via the physical machine so that all virtual machines in the DMZ and all virtual machines in the SECURE network are booted based on the time correction information configured herein.

Further, when a user configures the time zone or time in the GMT expression in the SLB1, the management server transmits a boot command to the hypervisor via the physical machine so that virtual machines to which a request is distributed by the SLB1 are booted based on the configured time correction information.

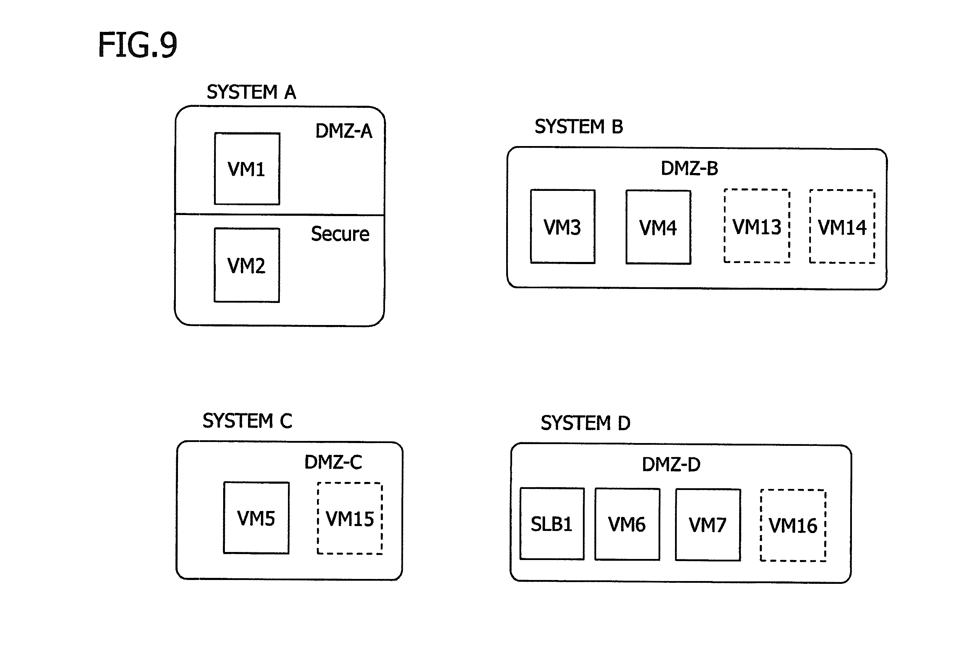

Fig. 9 is a diagram illustrating a specific example of a system to be controlled by the management server according to the present embodiment. A system A includes virtual machines VM1 and VM2 in DMZ-A and a SECURE network, respectively. A system B includes two virtual machines VM3 and VM4 in DMZ-B and adds two virtual machines VM13 and VM14 later according to an auto-scale command. A system C includes virtual machine VM5 in DMZ-C and adds a virtual machine VM15 later. Moreover, a system D includes SLB1 in DMX-D and virtual machines VM6 and VM7 to which a request is distributed from the SLB1 and adds a virtual machine VM16 later to which a request is distributed from the SLB1.

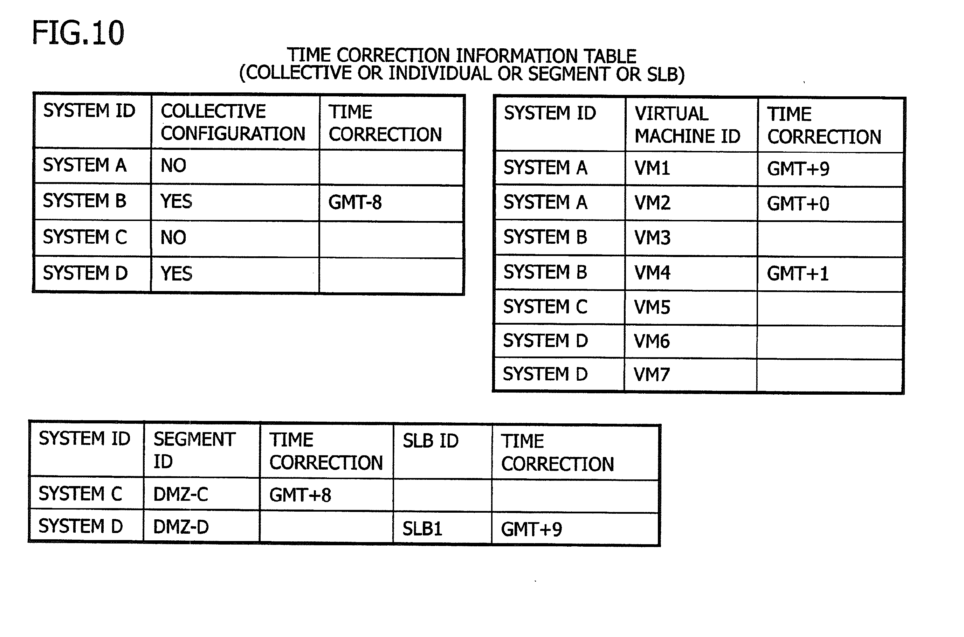

Fig. 10 is a diagram illustrating an example of the time correction information table in the management information table 322 of the management server 3. According to the example of Fig. 10, for the systems A to D illustrated in the specific example of Fig. 9, the following time correction is configured to the management server on the time correction configuration screen in the management console illustrated in Fig. 8.
(1) Time is corrected to GMT-8 collectively for system B;
(2) Time is corrected to GMT+8 collectively for DMZ-C of system C;
(3) Time is corrected to GMT+9 for SLB1 of system D; and
(4) Time is corrected to GMT+9, GMT+0, and GMT+1 for virtual machines VM1, VM2, and VM4.

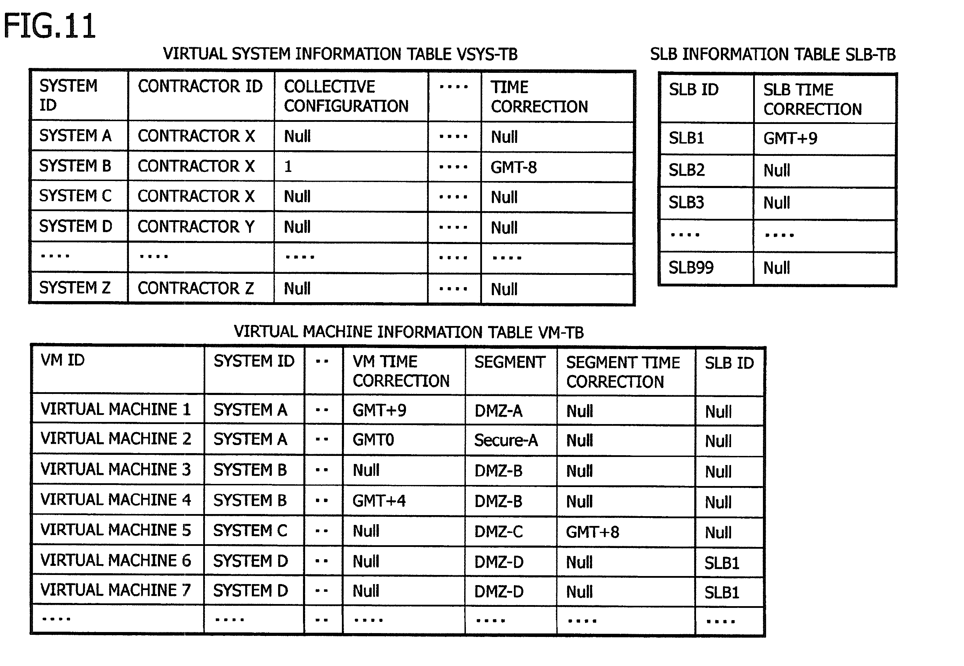

Fig. 11 is a diagram illustrating an example of the system (VSYS) information table, the virtual machine information table, and the SLB information table in the management information table 322 of the management server 3. When creating a virtual machine, the management server 3 registers the information thereof in these tables. Further, when the time correction information is set or configured, the management server 3 reflects the time correction information in these tables. When booting the virtual machine after creating the same, the management server 3 transmits a boot command including the time correction information configured in the attribute of a new virtual machine as an option to the hypervisor HV via the physical machine in addition to the information on the newly booted virtual machine by referring to these tables.

In the virtual system information table VSYS-TB in Fig. 11, the time correction information is registered in addition to contractor IDs of all systems managed by the management server, presence of collective configuration, and other system information (not illustrated). Moreover, the time correction information GMT-8 is set or configured collectively for the system B in the virtual system information table VSYS-TB as the above (1).

In the virtual machine information table VM-TB in Fig. 11, information on all virtual machines managed by the management server, time correction information of respective VMs, a segment to which the virtual machine belongs, the time correction information of the segment, and the ID of a SLB that distributes a request are registered. In the example of Fig. 11, VM time correction information is set or configured to the virtual machines VM1, VM2, and VM4, segment time correction information GMT+8 is set or configured to the virtual machine VM5 for the segment DMZ-C, and the virtual machines VM6 and VM7 are set or configured to belong to the request distribution destination VM of the SLB1.

Information (not illustrated) and the SLB time correction information are registered to all SLBs in the SLB information table SLB-TB in Fig. 11. In the example of Fig. 11, the SLB time correction information GMT+9 is set or configured for the SLB1 only.

Hereinafter, control of creation and boot of virtual machines according to the present embodiment will be described with reference to the specific examples of Figs. 9, 10, and 11. First, the flow of the processes of creating and booting virtual machines will be described. Then, the creation and boot processes to which the specific example is applied will be described.

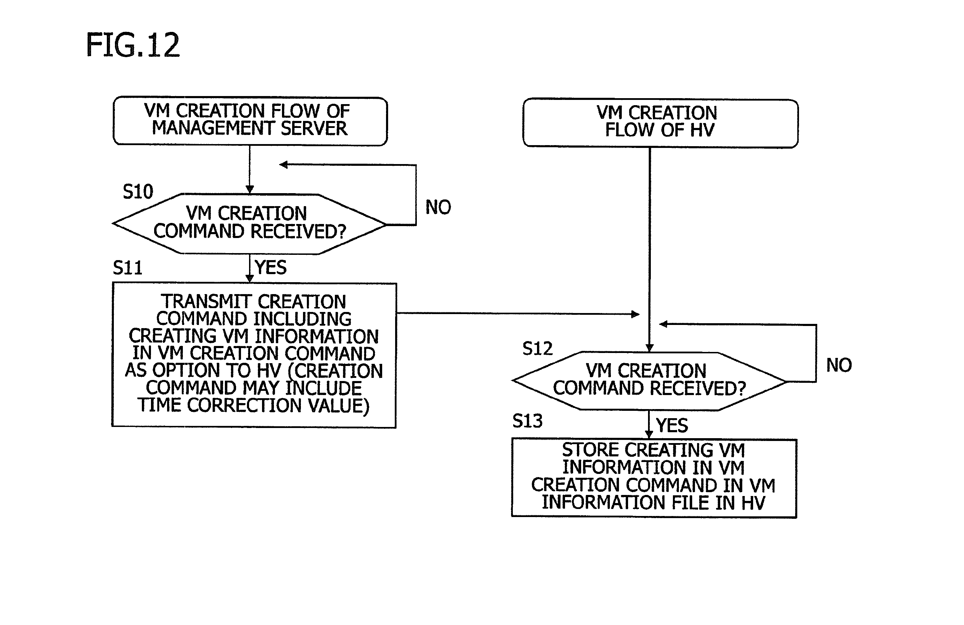

[Virtual machine creation and boot processes in present embodiment] Fig. 12 is a flowchart illustrating the flow of creating virtual machines. Upon receiving a virtual machine creation command (S10: YES), the management server 3 transmits a creation command including the VM information in the VM creation command as an option to the hypervisor HV on a physical machine that creates a virtual system (S11). The virtual machine (VM) creation command is received, for example, when a cloud user terminal creates a system from a management console or an API endpoint or when an auto-scale command issued in order for a SLB to scale out a new virtual machine is received.

Upon receiving the virtual machine creation command (S12), the hypervisor HV stores the VM information included in the creation command in the VM information file of the hypervisor (S13). The VM information file is stored in a hard disk area for the hypervisor as described above.

As described in step S11 of Fig. 12, the creation command may include time correction information. When the creation command is transmitted to the hypervisor, the hypervisor stores the created virtual machine information and the time correction information in the VM information file. After that, the management server may be able to boot the virtual machine based on the stored time correction information even when the boot command is transmitted to the hypervisor without appending the time correction information thereto.

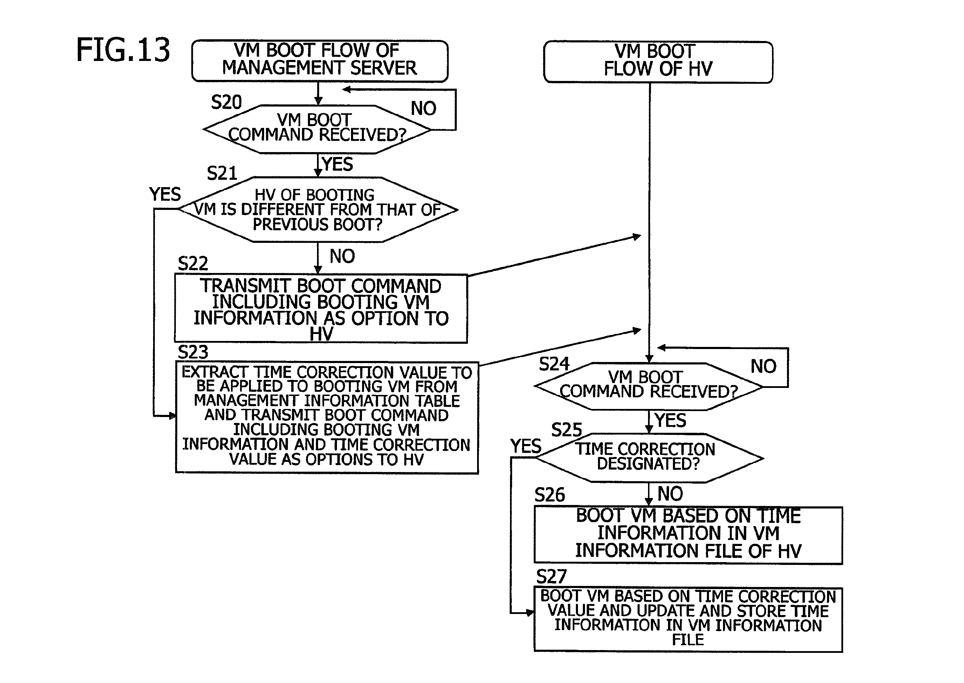

Fig. 13 is a flowchart illustrating the flow of booting virtual machines. When the management server 3 receives a virtual machine boot command (S20: YES), and the hypervisor HV boots a new virtual machine VM (that is, the hypervisor HV of the virtual machine to be booted is different from that in the previous boot (S21: YES), since the boot is the first boot for the hypervisor, the management server 3 transmits a boot command including booting VM information and a time correction value (or time correction information) as options to the hypervisor on a physical machine (S23). Moreover, when the hypervisor HV has already booted the virtual machine VM (S21: NO), and the time correction value has not changed from that in the previous boot, the management server 3 transmits a boot command including booting VM information as an option to the hypervisor HV on the physical machine (S22). When the time correction value has changed from that in the previous boot, the management server performs step S23.

When the boot command is received (S24: YES) and time correction is designated in the boot command as in S23 (S25: YES), the hypervisor HV boots the virtual machine based on the booting VM information and the time correction value and updates and stores the time information of the VM information file of the hypervisor (S27). On the other hand, when the time correction is not designated in the boot command as in step S22 (S25: YES), the hypervisor HV boots the virtual machine based on the booting VM information (S26). In this case, since the boot is not the first boot, the hypervisor HV boots the virtual machine based on the time correction value stored in the VM information file in step S27 during the first boot.

As described above, when the time correction information is registered in advance in the management information table 322 of a management machine in correlation with an attribute of the virtual machine, the management machine can transmit a boot command including the time correction information in the management information table 322 to the hypervisor on the physical machine to cause the hypervisor to boot the virtual machine based on the time correction information when the management machine boots the virtual machine for the first time after creating the same. As described above, the management information table 322 is also a time correction information table in which the time correction information is stored.

The time correction information table may not be registered in the management server. If the time correction information table is stored in a storage area other than the management server, the management server may extract time correction information corresponding to the attribute of a virtual machine to be booted by referring to the time correction information table and transmit a boot command for booting the virtual machine based on the time correction information to the physical machine.

In Figs. 12 and 13, the operation of the management server 3 and the hypervisor HV creating and booting virtual machines has been described. Next, the flow of creating and booting virtual machines in the following three cases will be described.
(1) Case in which a cloud service user manually creates and boots a virtual machine that forms a new system from a terminal;
(2) Case in which a cloud service user manually creates and boots an additional virtual machine in an existing system from a terminal; and
(3) Case in which an additional virtual machine is created and booted according to an auto-scale command.

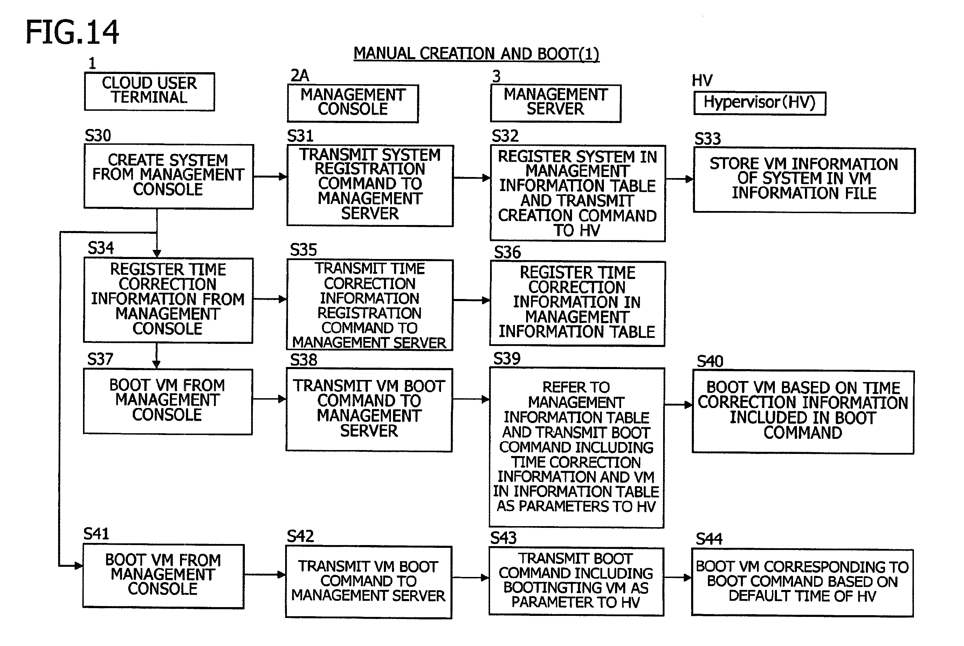

Fig. 14 is a flowchart illustrating the flow of creating and booting virtual machines when a cloud service user manually creates and boots a virtual machine that forms a new system from a terminal (Case (1)). First, the cloud user terminal 1 deploys (or creates) a new system from the management console 2A (S30). In response to this, the management console 2A issues a command to register the system to the management server 3 (S31). In response to this, the management server 3 registers the system and virtual machines and the like that form the system in the management information table 322 and transmits a creation command including VM information as an option to the hypervisor HV on the physical machine (S32). In response to this, the hypervisor HV stores the VM information of the system in the VM information file (S33).

Subsequently, the cloud user terminal 1 registers the time correction information from the management console 2A (S34). In response to this, the management console 2A transmits a time correction information registration command to the management server 3 (S35). In response to this registration command, the management server 3 registers the time correction information in the management information table (S36). As described above, the time correction information is registered for respective attributes (system, network segment, SLB, and the like) of the virtual machine.

After the time correction information is registered, when the cloud user terminal 1 boots the virtual machine from the management console (S37), the management console 2A transmits a virtual machine boot command to the management server 3 (S38). In response to this boot command, the management server 3 refers to the time correction information table in the management information table 322 to extract time correction information to be applied to an booting virtual machine in the time correction information table and transmits a boot command including the time correction information and the booting VM information as options (or parameters) to the hypervisor HV on the physical machine (S39). The boot command is one of the APIs possessed by the hypervisor HV. The hypervisor HV executes this boot command to boot the virtual machine corresponding to the booting VM information based on the time correction information and stores the time correction information in the VM information file (S40). As a result, in the subsequent boot, the hypervisor boots the virtual machine based on the time correction information stored in the VM information file.

On the other hand, when the time correction information is not registered in step S34 and the cloud user terminal 1 boots the virtual machine from the management console (S41), the management console 2A transmits a virtual machine boot command to the management server 3 (S42). Even when the management server 3 refers to the time correction information table in the management information table 322 in response to the boot command, since the time correction information to be applied to the booting virtual machine is not registered, the management server 3 transmits a boot command including the booting VM information as an option to the hypervisor HV on the physical machine (S43). Thus, the hypervisor HV boots the virtual machine corresponding to the booting VM information in the boot command based on the default time of the hypervisor (S44).

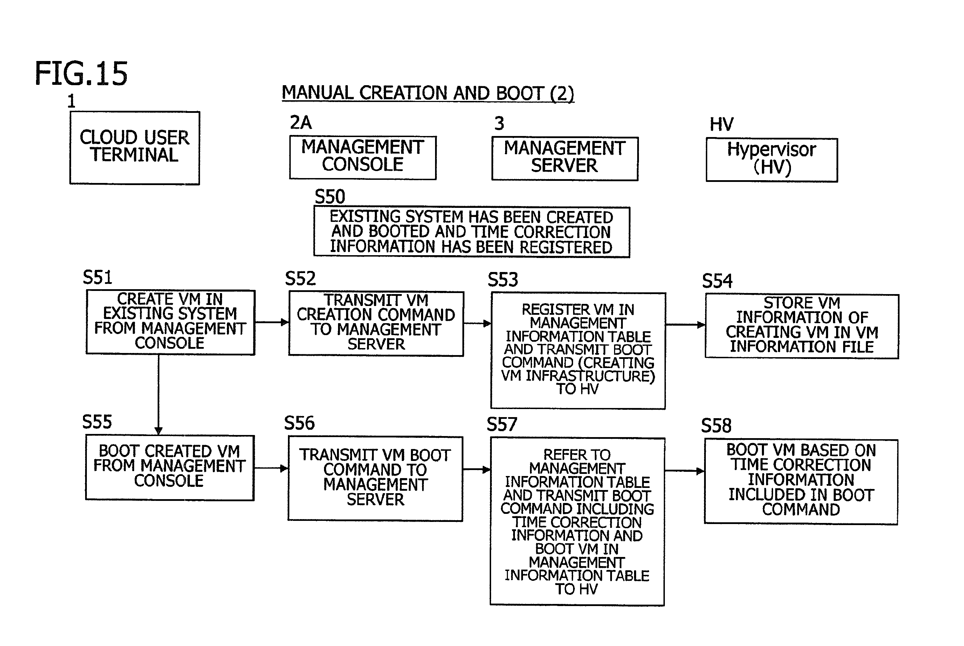

Fig. 15 is a flowchart illustrating the flow of creating and booting virtual machines when a cloud service user manually creates and boots an additional virtual machine in an existing system from a terminal (Case (2)). In Fig. 15, it is assumed that virtual machines have been created and booted and the time correction information has been registered according to the flowchart of Fig. 14 (S50).

Thus, the cloud user terminal 1 deploys or creates an additional virtual machine in an existing system from the management console 2A (S51). In response to this, the management console 2A issues a command to register the additional virtual machine to the management server 3 (S52). In response to this command, the management server 3 registers the additionally created virtual machine in the management information table 322 and transmits a creation command including the creating VM information as an option to the hypervisor HV on the physical machine (S53). In response to this, the hypervisor HV stores the creating VM information in the VM information file (S54).

Subsequently, when the cloud user terminal 1 boots the virtual machine created from the management console (S55), the management console 2A transmits a virtual machine boot command to the management server 3 (S56). In response to this boot command, the management server 3 refers to the time correction information table in the management information table 322 to extract the time correction information to be applied to the booting virtual machine in the table and transmits a boot command including the time correction information and the booting VM information as options (or parameters) to the hypervisor HV on the physical machine (S57). The hypervisor HV executes this boot command to boot the virtual machine corresponding to the booting VM information based on the time correction information and stores the time correction information in the VM information file (S58). When the hypervisor HV boots the virtual machine for the first time, the hypervisor HV stores the time correction information designated in the boot command in the VM information file so that the same virtual machine is booted based on the stored time correction information in the subsequent boot.

In this manner, since the time correction information is registered in correlation with the attribute of the virtual machine, when a new virtual machine belonging to the attribute is booted after creating the same, even if the newly created virtual machine is booted by a hypervisor of a certain physical machine, the management server 3 transmits a boot command including the registered time correction information as an option (or parameter) to the hypervisor HV on the physical machine. Thus, the newly created virtual machine is booted based on the time correction information registered in the hypervisor HV. Even when a plurality of virtual machines are created and booted in different physical machines, since a common management server registers the time correction information to the different physical machines, the virtual machines are booted based on the configured time correction information.

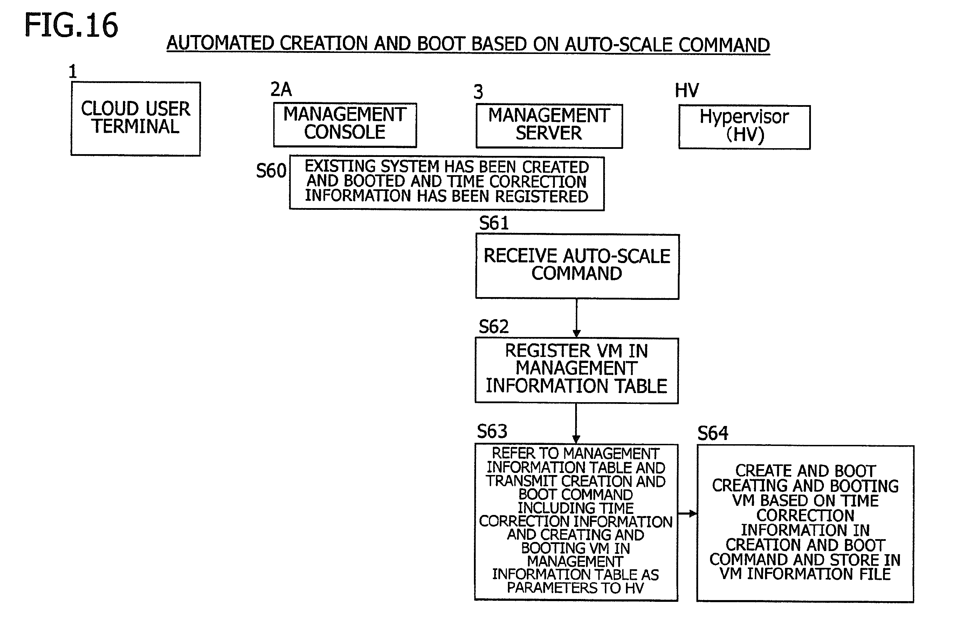

Fig. 16 is a flowchart illustrating the flow of creating and booting virtual machines when an additional virtual machine is created and booted according to an auto-scale command from a SLB or the like (Case (3)). In Fig. 16, it is assumed that virtual machines have been created and booted and the time correction information has been registered according to the flowchart of Fig. 14 (S60).

First, the management server 3 receives an auto-scale command (S61). For example, when the number of requests distributed by the SLB is equal to or larger than a threshold or the load of virtual machines monitored by a monitoring server exceeds a threshold, the SLB or the monitoring server boots an auto-scale command of the management server. The auto-scale command includes information on a target system, segment, SLB, and the like and is transmitted from the SLB or the monitoring server to the management server.

Using boot of the auto-scale command as a trigger, the management server 3 registers additional virtual machine information included in the auto-scale command in the management information table (S62). The management server 3 extracts time correction information to be applied to a virtual machine to be created and booted by referring to the management information table 322 and transmits a creation and boot command including the time correction value and the creating and booting VM information as options (or parameter) to the hypervisor HV on the physical machine (S63).

In response to this, the hypervisor creates and boots the virtual machine to be created and booted, included in the creation and boot command based on the time correction value and stores the time correction information and the creating and booting virtual machine information in the VM information file (S64).

In the above example, the management server 3 transmits the creation and boot command to the hypervisor in response to boot of the auto-scale command. However, as in Figs. 14 and 15, the management server 3 may transmit a creation command to the hypervisor on the physical machine to cause the hypervisor to store the virtual machine information in the VM information file and then transmit a boot command to the hypervisor on the physical machine to cause the hypervisor to boot the created virtual machine based on the time correction information.

As in the above example, even when a virtual machine is created and booted automatically in response to boot of an auto-scale command, the time correction information is registered in advance in correlation with the attribute in the management information table (time information table) 322 of the management server 3. Therefore, even if the automatically created virtual machine is created in a certain physical machine, the virtual machine is booted based on the time correction information applied to a virtual machine newly created in various physical machines according to the boot command including the time correction information transmitted by the management server 3 as an option (or parameter).

[Example of virtual machine creation and boot process of present embodiment] Hereinafter, an example of a process of creating and booting virtual machines belonging to a system, a network segment, and a SLB will be described based on the specific examples of Figs. 9, 10, and 11.

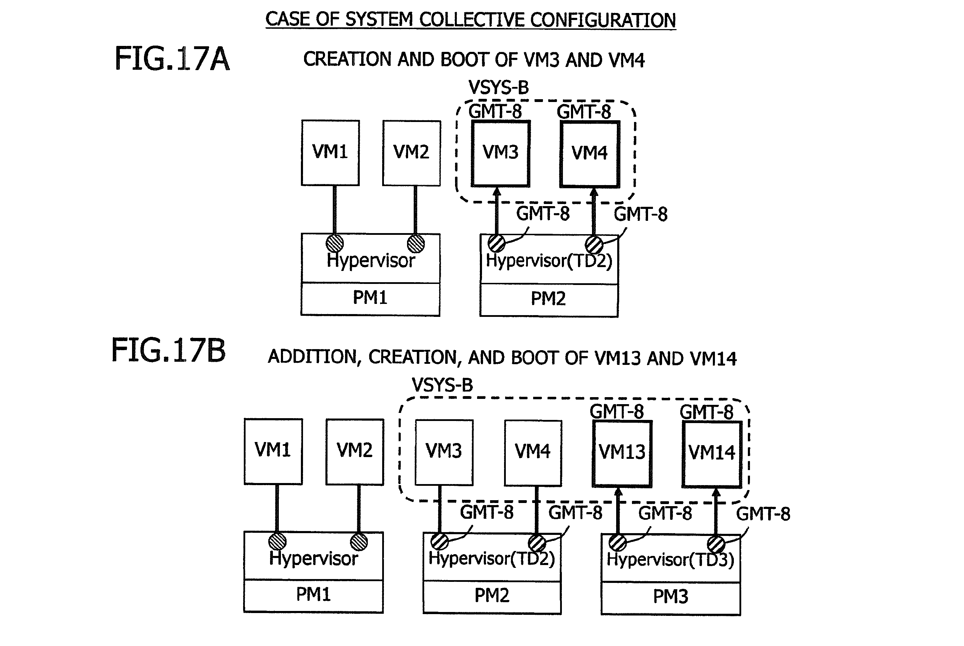

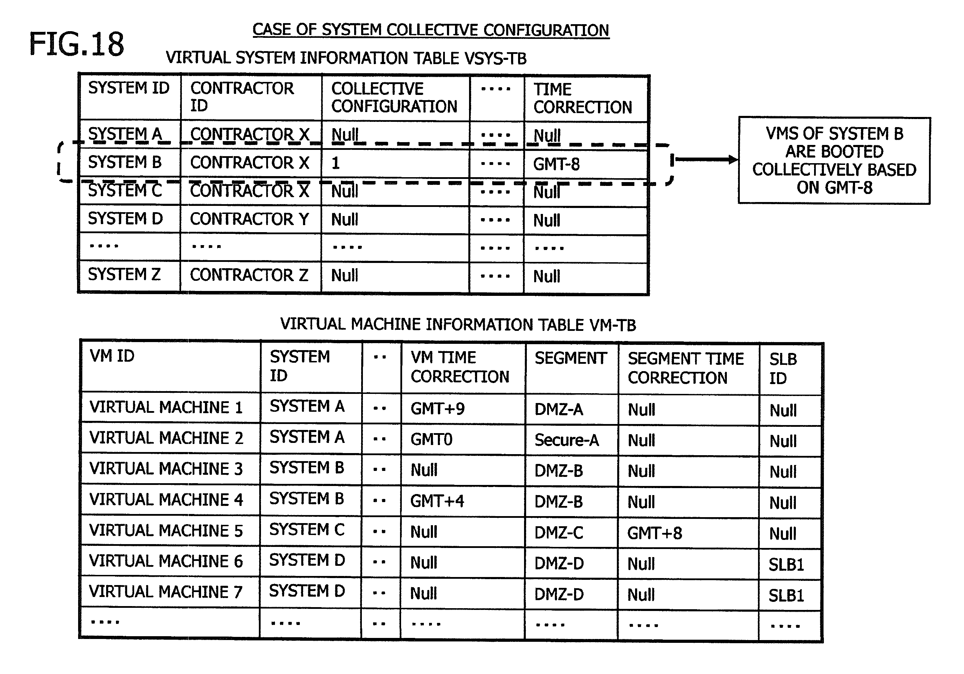

[First example] Figs. 17A and 17B are diagrams illustrating a virtual machine creation and boot process when time correction is configured collectively for a system, which is a first example. Moreover, Fig. 18 is a diagram illustrating a management information table referred to in the virtual machine creation and boot process of Figs. 17A and 17B. The first example is an example of the system B illustrated in Fig. 9. The management information table of Fig. 18 is the same as that of Fig. 11 and illustrates which item will be referred to.

Fig. 17A illustrates an example in which virtual machines VM3 and VM4 that form a system VSYS-B are created and booted in a physical machine PM2. For example, a cloud user who wants to construct the system VSYS-B manually creates the virtual machines VM3 and VM4 from the management console 2A on the terminal 1. In this case, the cloud user is not allowed to select any physical machine in which the virtual machines VM3 and VM4 are to be created, but the management server 3 selects an appropriate physical machine according to the state of a physical machine group in the server facility. Thus, it is not possible to predict to which time zone the default time TD2 of the physical machine PM2 will belong.

In this case, first, the management server 3 selects the physical machine PM2 in which virtual machines of the system VSYS-B are to be created. As illustrated in the flowchart of Fig. 14, the management server 3 registers the system VSYS-B made up of the virtual machines VM3 and VM4 in the management information table 322 and transmits a creation command to the hypervisor HV on the physical machine to cause the hypervisor HV to execute the creation command to store the information on the virtual machines VM3 and VM4 of the system VSYS-B in the VM information file of the hypervisor (S32 and S33).

Subsequently, when the cloud user configures the time correction information GMT-8 collectively for the system VSYS-B from the management console 2A, the management server 3 registers the time correction information GMT-8 in the management information table 322 (S36).

After that, when the cloud user boots the virtual machines VM3 and VM4 from the management console 2A, the management server 3 detects that the time correction information GMT-8 is to be registered collectively for the system B from the virtual system information table VSYS-TB of the management information table 322 as illustrated in Fig. 18, extracts the time correction information GMT-8, and transmits a boot command including the booting virtual machine information and the extracted time correction information GMT-8 as options (parameters) to the hypervisor HV on the physical machine PM2 (S39). In response to this, the hypervisor HV of the physical machine PM2 boots the virtual machines VM3 and VM4 designated in the boot command based on the time correction information GMT-8 and stores the time correction information in the VM information file (S40). In this case, as illustrated in Figs. 17A and 17B, although the default time of the hypervisor HV of the physical machine PM2 is TD2, since the hypervisor has received the boot command including the time correction information GMT-8 registered collectively for the system VSYS-B in the management information table of the management server 3 as an option, it is possible to cause the hypervisor to execute the boot command to boot the virtual machines VM3 and VM4 based on the time correction information GMT-8. Moreover, in the subsequent boot, the hypervisor boots the virtual machines VM3 and VM4 based on the time correction information stored in the VM information file.

According to Fig. 18, although the time correction information GMT+4 is configured for the virtual machine VM4, the collective time correction information GMT-8 for the system B is used with a higher priority. This logical priority does not limit the present embodiment particularly, but the collective time correction information may not be used with a higher priority. In that case, configuration of the time correction information for the virtual machine VM4 is not permitted, for example.

Fig. 17B illustrates an example in which virtual machines VM13 and VM14 are added to the system VSYS-B made up of the virtual machines VM3 and VM4. The virtual machines VM13 and VM14 are added, for example, when the cloud user of the system VSYS-B manually add the virtual machines or when the management server 3 boots an auto-scale command automatically, for example, when the processing amount of the existing virtual machines VM3 and VM4 increases and the load of the physical machine PM2 exceeds a threshold for a certain period.

In the case of adding virtual machines manually, according to the flowchart of Fig. 15, when the cloud user creates the virtual machines VM13 and VM14 from the management console 2A, the management server 3 selects a physical machine PM3, registers the information on the virtual machines VM13 and VM14 in the management information table, and transmits a creation command including the VM information as an option to the hypervisor on the physical machine PM3 (S53). The hypervisor executes the creation command to store the VM information in the VM information file (S54).

When the cloud user boots the virtual machines VM13 and VM14 from the management console, the management server 3 refers to the management information table 322 to extract the time correction information GMT-8 to be applied to the booting virtual machines VM13 and VM14 in the table and transmits a boot command including the time correction information and the booting VM information as options to the hypervisor HV on the physical machine (S57). The hypervisor HV executes this boot command to boot the virtual machines VM13 and VM14 corresponding to the booting VM information based on the time correction information GMT-8 and stores the time correction information in the VM information file (S58).

In the case of adding virtual machines automatically, according to the flowchart of Fig. 16, the management server 3 registers the virtual machines VM13 and VM14 in the management information table, transmits a creation and boot command including the virtual machine information and the time correction information GMT-8 as options to the hypervisor on the physical machine PM3 to cause the hypervisor to store the virtual machines VM13 and VM14 in the VM information file, boot the virtual machines based on the time correction information GMT-8, and store the time correction information GMT-8 in the VM information file (S62, S63, and S64).

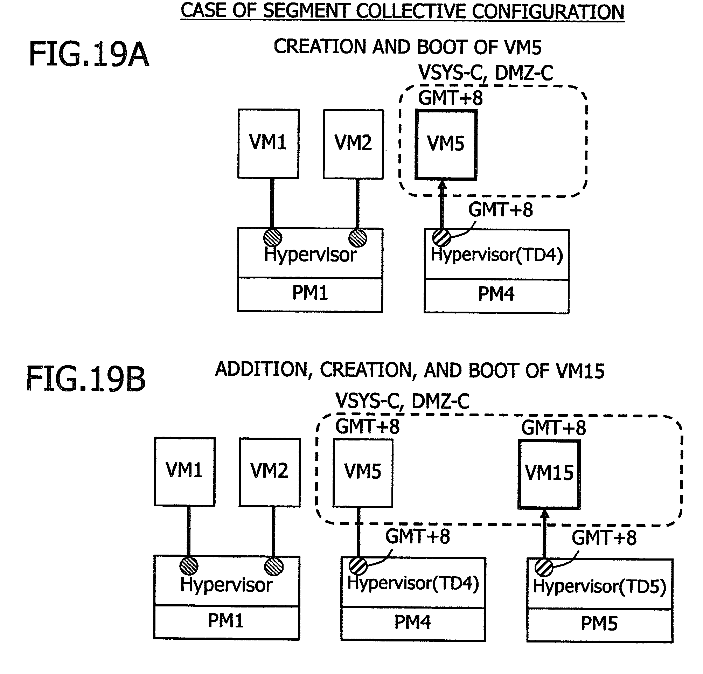

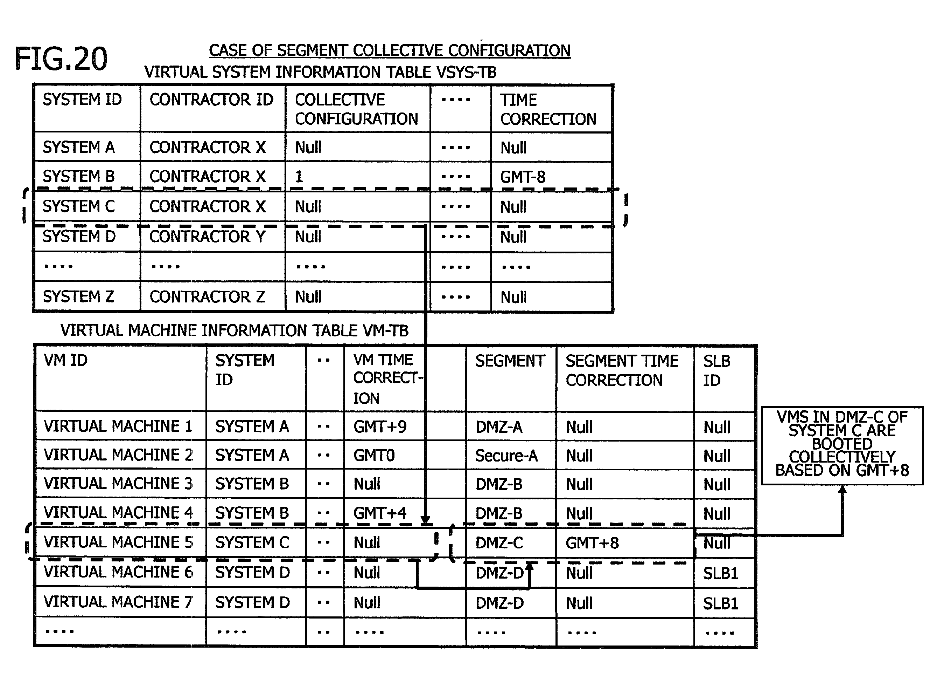

[Second example] Figs. 19A and 19B are diagrams illustrating a virtual machine creation and boot process when time correction is configured collectively for a network segment, which is a second example. Moreover, Fig. 20 is a diagram illustrating a management information table referred to in the virtual machine creation and boot process of Figs. 19A and 19B. The second example is an example of the system C illustrated in Fig. 9. The management information table of Fig. 20 is the same as that of Fig. 11 and illustrates which item will be referred to.

Fig. 19A illustrates an example in which the virtual machine VM5 in DMZ-C of the system VSYS-C is created in a physical machine PM4. For example, a cloud user who wants to construct the system VSYS-C manually creates the virtual machine VM5 from the management console 2A on the terminal 1. In this case, the cloud user is not allowed to select any physical machine in which the virtual machine VM5 is to be created, but the management server 3 selects an appropriate physical machine according to the state of a physical machine group in the server facility. Thus, it is not possible to predict to which time zone the default time TD4 of the physical machine PM4 will belong.

In this case, similarly to Fig. 17A, first, the management server 3 selects the physical machine PM4 in which the virtual machines of the system VSYS-C are to be created, registers the system VSYS-B made up of the virtual machines VM3 and VM4 in the management information table 322, and transmits a creation command to the hypervisor HV on the physical machine to cause the hypervisor HV to execute the creation command to store the information on the virtual machine VM5 in the VM information file (S32 and S33).

Subsequently, when the cloud user configures the time correction information GMT+8 collectively for the DMZ-C which is one of the network segments of the system VSYS-C from the management console 2A, the management server 3 registers the time correction information GMT+8 in the management information table 322 (S36).

After that, when the cloud user boots the virtual machine VM5 from the management console 2A, the management server 3 searches the management information table 322 as illustrated in Fig. 20. The management server 3 detects from the management information table 322 that the time correction information is not registered collected for the system C of the virtual system information table VSYS-TB, the virtual machine VM5 belongs to the network segment DMZ-C in the virtual machine information table VM-TB, and the time correction information GMT+8 is configured for the network segment DMZ-C. Thus, the management server 3 extracts the time correction information GMT+8 and transmits a boot command including the booting virtual machine information and the extracted time correction information GMT+8 as options to the hypervisor HV on the physical machine PM4 (S39). The hypervisor HV of the physical machine PM4 executes this boot command to boot the virtual machine VM5 designated in the boot command based on the time correction information GMT+8 and stores the time correction information in the VM information file (S40).

Fig. 19B illustrates an example of adding a virtual machine VM15 in the DMZ-C of the system VSYS-C. The reason for adding the virtual machine is the same as the first example of Figs. 17A and 17B.

In the case of adding the virtual machine manually, according to the flowchart of Fig. 15, when the cloud user creates the virtual machine VM15 from the management console 2A, the management server 3 selects a physical machine PM5, registers the information on the virtual machine VM15 in the management information table, and transmits a creation command including the VM information as an option to the hypervisor on the physical machine PM5 to cause the hypervisor to store the VM information in the VM information file (S53 and S54).

When the cloud user boots the virtual machine VM15 from the management console, the management server 3 refers to the management information table 322 to extract the time correction information GMT+8 to be applied to the booting virtual machine VM15 in the table and transmits a boot command including the time correction information and the booting VM information as options to the hypervisor HV on the physical machine to cause the hypervisor HV to boot the virtual machine VM15 corresponding to the booting VM information based on the time correction information GMT+8 included in the boot command and store the time correction information in the VM information file (S57 and S58). Although registration of the virtual machine VM15 is not depicted in Fig. 20, the virtual machine VM15 is registered in the same manner as the virtual machine VM5.

In the case of adding the virtual machine automatically, according to the flowchart of Fig. 16, the management server 3 registers the virtual machine VM15 in the management information table, transmits a creation and boot command including the virtual machine information and the time correction information GMT+8 as options to the hypervisor on the physical machine PM5 to cause the hypervisor to store the virtual machine VM15 in the VM information file, boot the virtual machine based on the time correction information GMT+8, and store the time correction information GMT+8 in the VM information file (S62, S63, and S64).

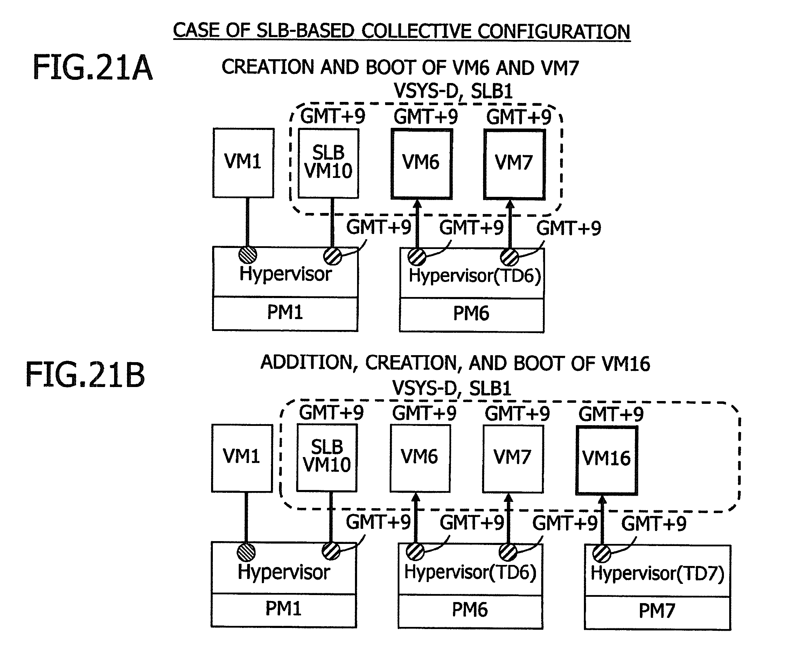

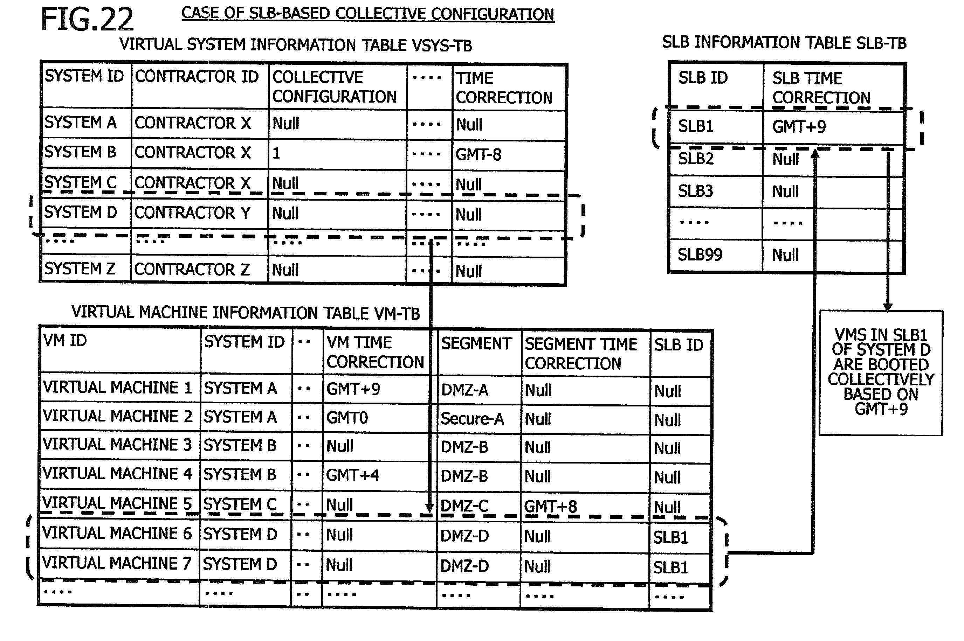

[Third example] Figs. 21A and 21B are diagrams illustrating a virtual machine creation and boot process when time correction is configured collectively for respective SLBs, which is a third example. Moreover, Fig. 22 is a diagram illustrating a management information table referred to in the virtual machine creation and boot process of Figs. 21A and 21B. The third example is an example of the system D illustrated in Fig. 9. The management information table of Fig. 22 is the same as that of Fig. 11 and illustrates which item will be referred to.

Fig. 21A illustrates an example in which virtual machines VM6 and VM7 (a subordinate virtual machine group of SLB1) to which a request is distributed by the SLB1 in the system VSYS-D are created and booted in a physical machine PM6. For example, a cloud user who wants to construct the system VSYS-D manually creates the virtual machines VM6 and VM7 from the management console 2A. In this case, the cloud user is not allowed to select any physical machine in which the virtual machines VM6 and VM7 are to be created, but the management server 3 selects an appropriate physical machine according to the state of a physical machine group in the cloud center. Thus, it is not possible to predict to which time zone the default time TD6 of the physical machine PM6 will belong.

First, when the cloud user creates the request distribution destination virtual machines VM6 and VM7 of the SLB1 from the management console 2A, as described with reference to the flowchart of Fig. 14, the management server 3 determines the physical machine PM6 in which the virtual machines are to be created, registers the virtual machines VM6 and VM7 in the management information table 322, and transmits a creation command including the VM information as an option to the hypervisor on the physical machine PM6 to cause the hypervisor to store the information on the virtual machines in the VM information file (S32 and S33).

When the cloud user registers the time correction information GMT+9 for the SLB1 from the management console 2A, the management server 3 registers the time correction information GMT+9 corresponding to the SLB1 in the management information table 322 (S36).

Further, when the cloud user boots the virtual machines VM6 and VM7 from the management console, the management server 3 refers to the management information table 322 to extract the time correction information GMT+9 to be applied to the booting virtual machines VM6 and VM7 in the table. As illustrated in Fig. 22, the management server 3 detects that the virtual machines VM6 and VM7 belong to the SLB1 and the time correction information GMT+9 is registered by sequentially referring to the virtual system information table VSYS-TB, the virtual machine information table VM-TB, and the SLB information table SLB-TB in the management information table 322. Moreover, the management server 3 transmits a boot command including the time correction information and the booting VM information as options to the hypervisor HV on the physical machine to cause the hypervisor HV to boot the virtual machines VM6 and VM7 corresponding to the booting VM information based on the time correction information GMT+9 included in the boot command and store the time correction information in the VM information file (S39 and S40). In this manner, the virtual machines VM6 and VM7 are booted based on the time correction information GMT+9 registered in the management server, different from the default time TD6 of the hypervisor. In the subsequent boots, the hypervisor boots the virtual machines VM6 and VM7 based on the time correction information GMT+9 stored in the VM information file.

Fig. 21B illustrates an example in which the SLB1 in the system VSYS-D adds a virtual machine VM16 according to an auto-scale command. That is, Fig. 21B illustrates an example in which, when a total number of request exceeds a threshold for a certain period, the SLB1 boots an auto-scale command of the management server 3 and the management server 3 automatically adds the virtual machine VM16.

In response to the auto-scale command, according to the flowchart of Fig. 16, the management server 3 registers the virtual machine VM16 in the management information table and searches the management information table 322 to detect the time correction information GMT+9 for the SLB1 to which the virtual machine VM16 belongs. Although the virtual machine VM16 is not depicted in the management information table of Fig. 22, it is assumed that the virtual machine VM16 is registered in the same manner as VM6 and VM7. The management server 3 transmits a creation and boot command including the virtual machine information and the time correction information GMT+9 as options to the hypervisor HV on the selected physical machine PM7 to cause the hypervisor to store the virtual machine VM16 in the VM information file, boot the virtual machine VM16 based on the time correction information GMT+9, and store the time correction information GMT+8 in the VM information file (S62, S63, and S64).

As obvious from the three examples, when the time correction information is registered in the management information table of the management server 3 in correlation with an attribute (system, network segment, and SLB) of a virtual machine, the hypervisor boots a plurality of virtual machines created in different physical machines based on the registered time correction information in the first boot of the respective virtual machines. Since the hypervisor stores the time correction information used in the first boot in the VM information file, the virtual machine is booted based on the same time correction information in the second and subsequent boot.

[Configuration of virtual machine time correction information in present embodiment] According to the present embodiment, since the management server registers the time correction information and transmits a boot command including the time correction information as an option to a hypervisor on a physical machine, a virtual machine that is newly created and booted is booted based on the time correction information. Thus, it is not necessary to manually configure the time correction in the virtual machine after boot.

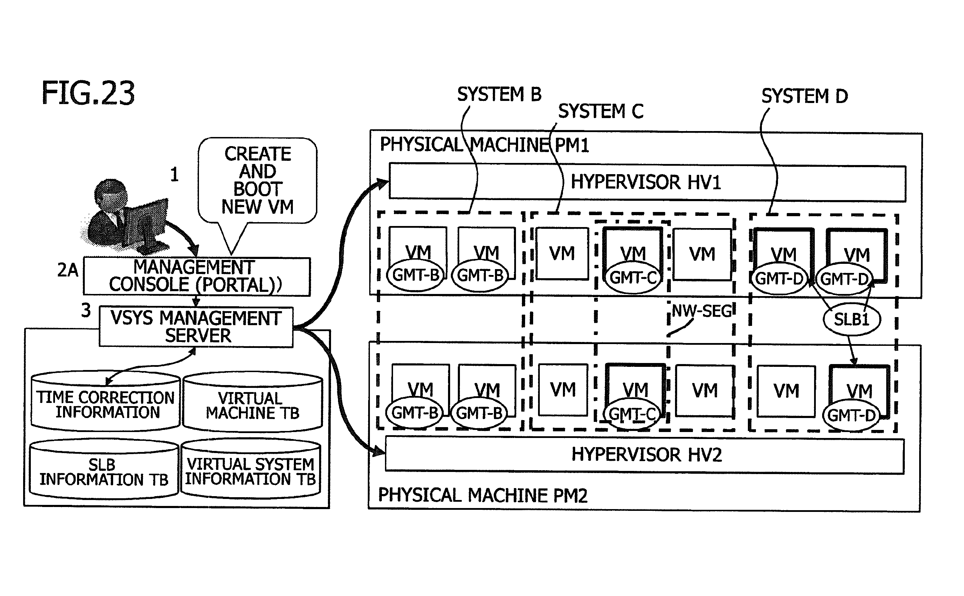

Fig. 23 is a diagram illustrating an example in which virtual machines belonging to the same attribute are booted based on the registered time correction information. In the example of Fig. 23, virtual machines VMs are created and booted in two different physical machines PM1 and PM2.

First, a system B has four virtual machines VMs which are created and booted across two physical machines PM1 and PM2. Since the time correction information GMT-B is registered collected for the system B, the four virtual machines VMs are booted based on the same time correction information GMT-B in the first boot. Since the time correction information is GMT-B stored in the VM information file of the hypervisor, the hypervisor boots the virtual machines based on the time correction information GMT-B stored in the VM information file in the second and subsequent boot unless the boot command does not include another time correction information as an option.

In Fig. 23, a system C includes six virtual machines VMs which are created and booted across two physical machines PM1 and PM2. Two virtual machines VMs among the six virtual machines VMs belong to the same network segment NW-SEG. Since the time correction information GMT-C is registered collectively for the network segment NW-SEG of the system C, the two virtual machines VM in the network segment NW-SEG are booted based on the same GMT-C in the first boot. Since the time correction information GMT-C is stored in the VM information file of the hypervisor, the hypervisor boots the virtual machines based on the time correction information GMT-C stored in the VM information file in the second and subsequent boot unless the boot command includes another time correction information as an option.

Further, in Fig. 23, a system D includes four virtual machines VMs which are created and booted across two physical machines PM1 and PM2. Three virtual machines VMs among the four virtual machines VMs belong to the same SLB1. Since the time correction information GMT-D is registered collectively for the SLB1 of the system D, the three virtual machines VMs are booted based on the same time correction information GMT-D in the first boot. Since the time correction information GMT-D is stored in the VM information file of the hypervisor, the hypervisor boots the virtual machines based on the time correction information GMT-D stored in the VM information file in the second and subsequent boot.

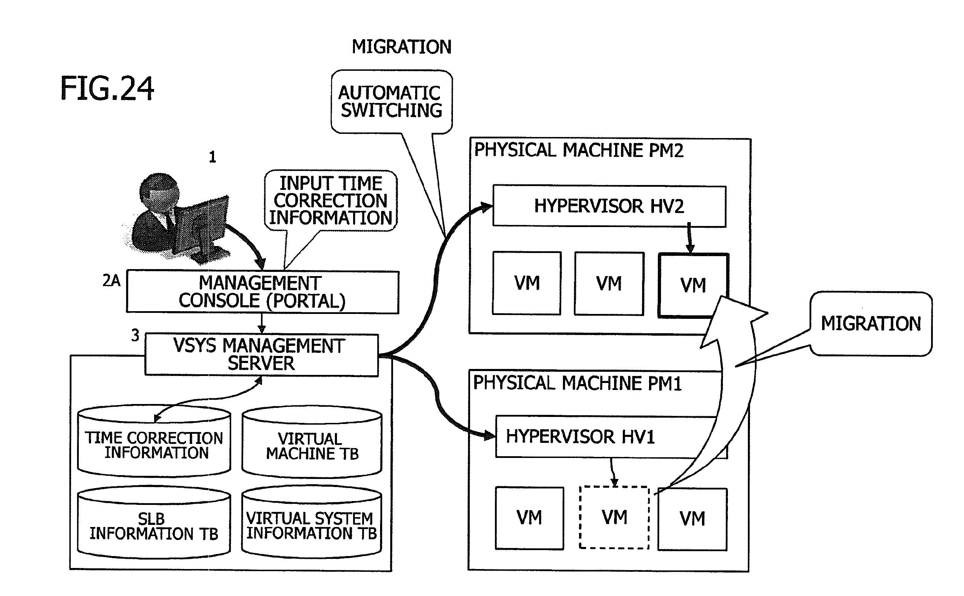

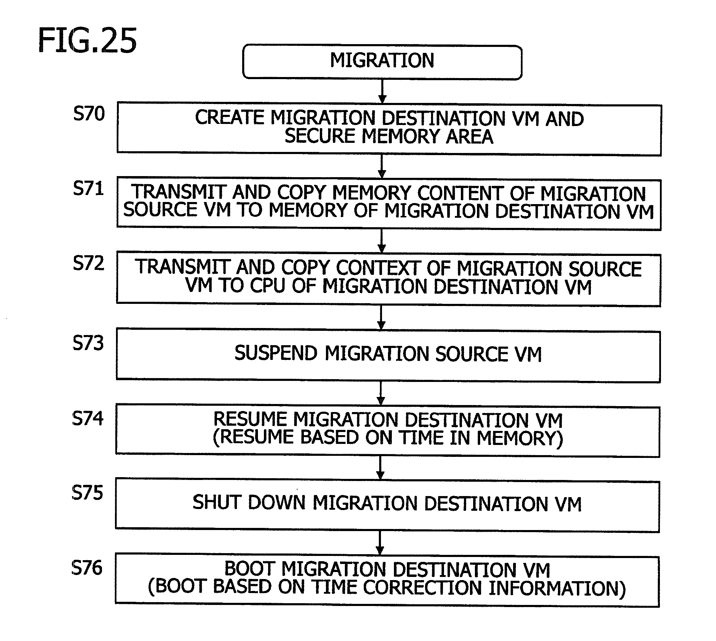

Fig. 24 is a diagram for describing migration in the management server of the present embodiment. Moreover, Fig. 25 is a flowchart illustrating a migration process. Fig. 24 illustrates an example in which a virtual machine VM1 which has been created and booted in a physical machine PM1 migrates to another physical machine PM2.

The migration process will be described with reference to the flowchart of Fig. 25. First, when the cloud user terminal 1 inputs a migration command to migrate the virtual machine VM1 from the physical machine PM1 to the physical machine PM2 via the management console 2A, the management server 3 transmits the migration command to a hypervisor HV1 of the physical machine PM1.

In response to this, the hypervisor HV1 causes a hypervisor HV2 of the migration destination physical machine PM2 to create a migration destination virtual machine VM2 and secure a memory area (S70). The hypervisor HV1 transmits and copies the memory content of the migration source virtual machine VM1 to the memory of the migration destination virtual machine VM2 (S71). When the transmission of the memory content is completed, the hypervisor HV1 transmits and copies the value (context) of a register in the CPU of the migration source virtual machine VM1 to a register in the CPU of the migration destination virtual machine VM2 (S72).

Subsequently, the hypervisor HV1 suspends the migration source virtual machine VM1 and the hypervisor HV2 resumes the migration destination virtual machine VM2 (S73 and S74). In this case, since the migration destination virtual machine VM2 resumes based on the memory information and context of the migration source virtual machine VM1, the migration destination virtual machine VM2 resumes based on the time correction information of the migration source virtual machine VM1. In this way, migration ends.

After that, it is assumed that the migration destination virtual machine VM2 shuts down due to some reasons (S75). In this case, when the migration destination virtual machine VM2 is booted later, the management server 3 extracts the time correction information configured for the attribute of the migration source virtual machine VM1 and transmits a boot command including the time correction information as an option to the hypervisor HV2. As a result, the migration destination virtual machine VM2 is booted based on the time correction information.

In this manner, when a virtual machine migrates between different physical machines, and a migration destination virtual machine is created in a physical machine different from the physical machine of a migration source virtual machine and is booted later, the management server 3 of the present embodiment registers the time correction information and issues a boot command including the time correction information as an option. Therefore, the migration destination virtual machine VM2 can be booted based on the same time correction information.

### REFERENCE SIGNS LIST

1: CLOUD USER TERMINAL
2A: MANAGEMENT CONSOLE (CLOUD SERVICE PORTAL SITE)
3: MANAGEMENT SERVER
322: MANAGEMENT INFORMATION TABLE
PM: PHYSICAL MACHINE (PHYSICAL CALCULATOR)
HV: HYPERVISOR (VIRTUAL SOFTWARE)
VM1, VM2: VIRTUAL MACHINE (VIRTUAL CALCULATOR)
8: SERVER FACILITY (CLOUD CENTER)

## Claims

1. A virtual computer management program for causing a computer to execute a virtual computer management process comprising:
extracting (S23), when a virtual computer running on one of physical computers is booted, time correction information corresponding to an attribute of a boot target virtual computer from time correction registration information which include the time correction information corresponding to the attribute of the virtual computer; and
transmitting (S23) a boot command for booting the boot target virtual computer, based on the extracted time correction information, to the one of physical computers.

2. The virtual computer management program according to claim 1, the steps further comprising:
receiving a boot request to boot a virtual computer, wherein
the extracting and the transmitting are executed when the boot request is received.

3. The virtual computer management program according to claim 1, the steps further comprising:
receiving an additional creation request of additionally creating a virtual computer, wherein
the extracting and the transmitting are executed when the additional creation request is received.

4. The virtual computer management program according to claim 3, wherein
when the additional creation request is received from a server level balancer, a subordinate virtual computer of the server level balancer is created in the physical computer and the created virtual computer is booted based on the time correction information.

5. The virtual computer management program according to claim 1, the steps further comprising:
registering time correction information in the time correction registration information in correlation with a predetermined attribute in response to a request to register time correction information corresponding to the predetermined attribute.

6. The virtual computer management program according to claim 1, wherein
the transmitting involves causing the physical computer to store the time correction information corresponding to the attribute.

7. A virtual computer management method of managing virtual computers running on any of a plurality of physical computers the method comprising:
extracting (S23) time correction information corresponding to an attribute of a boot target virtual computer from time correction registration information which include the time correction information corresponding to the attribute of the virtual computer, when the virtual computer running on one of the physical computers is booted; and
transmitting (S23) a boot command for booting the boot target virtual computer based on the extracted time correction information to the one of physical computers.

8. A virtual computer system comprising:
a plurality of physical computers in which a hypervisor that creates and operates virtual computers are operated; and
a management server that manages the virtual computers operating on any one of the plurality of physical computers, wherein
the management server includes:
an extracting unit (305) configured to extract time correction information corresponding to an attribute of a boot target virtual computer from time correction registration information which include the time correction information corresponding to the attribute of the virtual computer, when the virtual computer created in the physical computer is booted; and
an booting unit (305) configured to transmit a boot command for booting the boot target virtual computer based on the extracted time correction information to a physical computer creating the boot target virtual computer, and
a hypervisor of a physical computer having received the boot command boots the boot target virtual computer based on the time correction information.

9. The virtual computer system according to claim 8, wherein
the management server further includes a receiving unit that receives a boot request to boot the virtual computer, and
upon receiving the boot request, the booting unit transmits the boot command.

10. The virtual computer system according to claim 8, further comprising:
the management server further includes a receiving unit that receives an additional creation request of additionally creating the virtual computer, wherein
upon receiving the additional creation request, the booting unit transmits the boot command.

11. The virtual computer system according to claim 10, wherein
Upon receiving the additional creation request from a server level balancer, the booting unit creates a subordinate virtual computer of the server level balancer in the physical computer and boots the created virtual computer based on the time correction information.

12. The virtual computer system according to claim 8, wherein
the management server further includes a registering unit configured to register time correction information in the time correction registration information in correlation with a predetermined attribute in response to a request to register time correction information corresponding to the predetermined attribute.

13. The virtual computer system according to claim 8, wherein
a physical computer having received the boot command causes the hypervisor to store the time correction information corresponding to the attribute.
